# EUROPEAN PATENT SPECIFICATION

(11) **EP 3 751 286 B1**
(45) Date of publication and mention of the grant of the patent: **01.01.2025**
(21) Application number: 19751164.5
(22) Date of filing: 02.02.2019
(51) Int. Cl.: G01N 35/04, G01N 21/63, G01N 21/76

(54) **FULLY AUTOMATIC PHOTOEXCITED CHEMILUMINESCENCE DETECTOR**
VOLLAUTOMATISCHER LICHTANGEREGTER CHEMILUMINESZENZDETEKTOR
DÉTECTEUR DE CHIMIOLUMINESCENCE PHOTOEXCITÉ ENTIÈREMENT AUTOMATIQUE

(30) Priority: 11.02.2018 CN 201810142004
(43) Date of publication of application: 16.12.2020
(73) Proprietor: Chemclin Diagnostics Co., Ltd., Beijing 100094 (CN)
(72) Inventor: LIAN, Zifu, Beijing 100094 (CN); YANG, Li, Beijing 100094 (CN); FANG, Quan, Beijing 100094 (CN); XIAO, Qingguo, Beijing 100094 (CN); ZHAO, Weiguo, Beijing 100094 (CN); LIU, Yuhui, Beijing 100094 (CN); LI, Lin, Beijing 100094 (CN)
(74) Representative: Stellbrink & Partner Patentanwälte mbB
(86) International application number: PCT/CN2019/074538
(87) International publication number: WO 2019/154348

(56) References cited:
- WO-A1-2014/002955
- CN-A- 107 356 587
- CN-U- 206 671 348
- CN-U- 206 671 355
- JP-A- 2017 110 961
- US-A1- 2014 093 975
- US-A1- 2015 063 956

## Description

### Cross-reference to Related Applications

This application claims the priority of Chinese patent application CN201810142004.1, entitled "Fully Automatic Light Initiated Chemiluminescence Detector" and filed on February 11, 2018.

### Field of the Invention

The present disclosure relates to the technical field of medical equipment, and in particular, to a fully automatic light initiated chemiluminescence detector.

### Background of the Invention

Chemiluminescence immunoassay (CLIA) is a technology which combines a chemiluminescence assay technology having high sensitivity with immunoreaction having high specificity and is used for detection analysis of various antigens, haptens, antibodies, hormones, enzymes, fatty acids, vitamins and drugs. It is the latest immunoassay technology developed after radioimmunoassay, enzyme immunoassay, fluorescence immunoassay and time-resolved fluorescence immunoassay.

Light initiated chemiluminescence is one of the methods for implementing the chemiluminescence assay. Light initiated chemiluminescence can be used to study the interaction between biomolecules, and it is mainly used for clinical detection of diseases. This technology integrates research in polymer microparticle technology, organic synthesis, protein chemistry, clinical detection and other related fields. Compared with the traditional enzyme-linked immunoassay method, it has such characteristics as being homogeneous-phase, high in sensitivity, simple in operation and easy to automate. Therefore, it has a very broad application prospect.

At present, the light initiated chemiluminescence analyzers in existence have the following problems: (1) low detection flux, so they cannot meet requirements of clinical detection in large-scale hospitals; (2) relatively long detection time, so a report cannot be provided in a short time; (3) low degree of automation, so there are relatively large individual differences due to manual operation; and (4) the false-reportin detection results due to the "HOOK" effect cannot be avoided. The HD-HOOK effect often occurs in immunoassays, and its incidence accounts for about 30% of positive samples. Due to the existence of the HD-HOOK effect, it cannot be accurately distinguished whether the result is obtained because the concentration of the detected sample exceeds the linear range of the detection kit or because the concentration of the detected sample is indeed the value, which leads to an increase in the experimental misdiagnosis, especially the false negative rate.
US2014/093975 A1 discloses an automatic analyzer includes a reaction unit configured for holding a reaction container and carrying the reaction container to a determined operation position, the operation position including a detection operation position; a detection unit configured for detecting analyte in the reaction container of the reaction unit in the detection operation position; a bound-free ("B/F") unit configured for removing unbound components of a reaction system; and a dispensing unit configured for dispensing reagent and/or a sample to the reaction container, wherein the reaction unit includes an incubation position for incubating a solution in the reaction container.
WO2014/002955 discloses a container supply device having: a tilted transportation path for transporting containers, which are arranged in a line, from the upstream to a container stand-by position located downstream; a partitioning member provided with a first partitioning plate which enters into and exits from the transportation track of the tilted transportation path, and a second partitioning plate which is located upstream the first partitioning plate and which is at an exit position relative to the transportation track when the first partitioning plate enters the transportation track and is at an enter position relative to the transportation track when the first partitioning plate exits the transportation track; and a driving means which pushes and pulls the partitioning member and which brings the partitioning member into or out of the transportation track.
JP2017/110961 provides a container supply unit comprising a container storage part, a container discharge part and a container alignment part. The container alignment part comprises an alignment rail. The alignment rail has a conveyance speed securing region and a posture stabilizing region. The conveyance speed securing region is inclined to a horizontal direction. The posture stabilizing region is provided successively downstream from the conveyance speed securing region in a conveyance direction, and set to a smaller angle of inclination to the horizontal direction than the conveyance speed securing region. Then a conveyance position is provided downstream from the posture stabilizing region in the conveyance direction and arranged in parallel with the horizontal direction.

### Summary of the Invention

The goal underlying the present invention is to provide an improved or ameliorated system of a chemiluminescence detector. The goal can be reached by the subject matter of the present invention and as further exemplified by the description and the claims.

The subject matter in accordance with the claims and/or the description attains this goal.

The present disclosure provides a fully automatic light initiated chemiluminescence detector which can effectively avoid problems such as individual differences, manual errors, non-standard actions and other uncertainties in the manual operation and improve the accuracy of chemical analysis. We were surprised to find that the fully automatic light initiated chemiluminescence detector of the present disclosure can effectively solve the problem of false-reporting detection results due to the "HOOK" effect.

The fully automatic light initiated chemiluminescence detector comprises a sample loading module, a sampling arm module, an incubation disk module, a reagent disk module, a reagent arm module and a detection module. A sample in the sample loading module is transferred to a reaction cuvette by means of the sampling arm module. After the reaction cuvette arrives at a specified position, the reagent arm module transfers a reagent in the reagent disk module to the reaction cuvette. The sample and the reagent in the reaction cuvette are mixed to be incubated at the incubation disk by a mixing mechanism. After the incubation, the detection module sends light on a substance to be detected in the reaction cuvette to initiate a reaction between the sample and the reagent, and detects a luminescence signal generated after the initiation. The fully automatic light initiated chemiluminescence detector further comprises a cuvette sorting module and a cuvette delivering module located between the cuvette sorting module and the incubation disk module. The cuvette sorting module is configured to sort disordered reaction cuvettes into ordered reaction cuvettes, which are delivered to the incubation disk module in sequence via the cuvette delivering module. The cuvette delivering module comprises a slide rail, a cuvette holding device slidably connected to the slide rail, a transmission device for actuating a movement of the cuvette holding device along the slide rail, a slide channel located below the cuvette holding device, and a reset device enabling the reset of the cuvette holding device. The cuvette holding device is configured to control a movement of the reaction cuvette, so that the cuvette is delivered horizontally directly from the cuvette sorting module through the slide channel to the incubation disk module.

In an embodiment, the cuvette sorting module locates behind the sampling arm module. The cuvette sorting module has a cuvette accommodation part for placing the reaction cuvette and a cuvette off-loading device set at the bottom of the cuvette accommodation part. The cuvette off-loading device comprises a reaction cuvette rotating disk. A cuvette groove, which matches the reaction cuvette, is provided at the circumferential edge at the top of the reaction cuvette rotating disk.

In an embodiment, the cuvette off-loading device includes a first actuating part to actuate the off-load of the reaction cuvette from the cuvette groove. The first actuating part is set at the side of the reaction cuvette rotating disk and includes a toggle wheel to actuate the offload of the reaction cuvette from the cuvette groove. A first cuvette off-loading groove, which matches the reaction cuvette, is provided on the toggle wheel.

Preferably, the first actuating part includes a cuvette off-loading member to actuate the off-load of the reaction cuvette from the cuvette groove. The cuvette off-loading member is connected to the toggle wheel via a first connecting shaft, and a second cuvette off-loading groove, which matches the reaction cuvette, is provided on the cuvette off-loading member. The second cuvette off-loading groove is parallel to the first cuvette off-loading groove.

In an embodiment, the first actuating part includes a linkage mechanism to actuate the periodic rotation of the toggle wheel, and the bottom a toggle groove corresponding to the cuvette groove is provided at a circumferential edge at the bottom of the reaction cuvette rotating disk. The linkage mechanism includes:
a first toggle bar, a first end of which is slidable in the toggle groove;
a first rotating shaft, which is fastened to a second end of the first toggle bar and is rotatably connected to a reaction cuvette slide channel base, reaction cuvette slide channel base which is fixedly set at the side of the rotating disk;
a first linking bar, which is fastened to the first rotating shaft; and
a second linking bar, a first end of which is fastened to a free end of the first linking bar, and a second end of which is connected to the toggle wheel via a second connecting shaft.

In an embodiment, the first connecting shaft is sheathed with a torsion spring to realize automatic resetting of the toggle wheel. A first end of the torsion spring is fastened to the reaction cuvette slide channel base, and a second end of the torsion spring is fastened to the toggle wheel.

In an embodiment, a reaction cuvette slide channel, which leads to the cuvette groove, is provided inside of the reaction cuvette slide channel base. A longitudinal guide groove is provided on the reaction cuvette slide channel, and a horizontal guide groove is provided at an end of the longitudinal guide groove on the reaction cuvette slide channel.

In an embodiment, the reaction cuvette rotating disk is rotatable in a tray. The bottom of the tray is fastened to the reaction cuvette slide channel base, and a first actuating device, which actuates the rotation of the rotating disk to rotate, is provided at the bottom of the tray.

In an embodiment, a second actuating device is provided near to the horizontal guide groove on the reaction cuvette slide channel base, and the second actuating device controls the movement of the reaction cuvette from a start of the horizontal guide groove to an end of the horizontal guide groove.

In an embodiment, the cuvette delivering module locates between the cuvette sorting module and the incubation disk module. The cuvette delivering module includes a slide rail, a cuvette holding device, a transmission device, a slide channel and a reset device. The cuvette holding device is slidably connected to the slide rail; the transmission device can actuate the movement of the cuvette holding device along the slide rail; the slide channel locates below the cuvette holding device, and the reaction cuvette locates inside the slide channel; the cuvette holding device can control the movement of the reaction cuvette; and the reset device can enable the reset of the cuvette holding device.

Preferably, the cuvette holding device includes a slider, a reaction cuvette claw, an electromagnet and a first photoelectric sensor. The slide rail is slidably engaged with the slider; the claw is set at one side of the slider and slides vertically relative to the slider; the electromagnet is set above the claw and is fixedly connected to the slider; and the first photoelectric sensor is set at one side of the claw and is fixedly connected to the slider.

In an embodiment, the sample loading module includes a baseplate, several test tube racks and a moving device. The test tube racks and the moving device are set on the baseplate, and the test tube racks are moved to specified positions by means of the moving device.

In an embodiment, the moving device includes an X-axis pushing mechanism. The X-axis pushing mechanism includes a circulation pushing member, which actuates the operation of a synchronous belt by means of a motor.

In an embodiment, blocking pieces are provided with intervals on the synchronous belt along the direction of the synchronous belt and the circulation pushing member pushes the test tube racks forward section by section by means of the synchronous belt having the blocking pieces.

In an embodiment, the moving device further includes a Y-axis pushing mechanism. The Y-axis pushing mechanism is a conveyor device, which is driven by a motor and conveys the test tube rack to the circulation pushing member.

In an embodiment, the X-axis pushing mechanism further includes a recycling pushing member to recycle a sampled test tube.

In an embodiment, the recycling pushing member locates opposite to the circulation pushing member, and the moving direction of the test tube rack pushed by the recycling pushing member is counter to the moving direction of the test tube rack pushed by circulation pushing member.

In an embodiment, the conveyor device includes a first conveyor belt and a second conveyor belt, conveying directions of which are counter to each other. The second conveyor belt conveys the test tube rack to the circulation pushing member, and the sampled test tube rack is conveyed to the recycling pushing member by the first conveyor belt.

Preferably, a sample loading module further includes a test tube barcode scanner, a test tube type discriminator, and a positioning device to determine a position for sampling a test tube. A scanning direction of the test tube barcode scanner and a discrimination direction of the test tube type discriminator face the test tube rack.

In an embodiment, the first conveyor belt and the second conveyor belt, conveying directions of which are counter to each other, are respectively set at two ends of the sample loading module. The test tube rack is set on the conveyor belt. A moving device includes a circulation pushing member and a recycling pushing member. The circulation pushing member and the recycling pushing member are set between the first conveyor belt and the second conveyor belt, and are respectively located at opposite sides of the rail sample loading module. The test tube rack is conveyed from the second conveyor belt to the circulation pushing member, and the circulation pushing member pushes the test tube rack to a test tube scanning component; after scanning and sampling, the test tube rack is transported to the first conveyor belt; and then the test tube rack is pushed back to the second conveyor belt by recycling pushing member.

In an embodiment, the sampling arm module includes a frame and an arm assembly. The arm assembly is set at an upper portion of the frame, and a vertical motion assembly and a rotary motion assembly, which are connected to the arm assembly, are provided on the frame. The vertical motion assembly enables the vertical movement of the arm assembly relative to the frame, and the rotary motion assembly enables the rotation of the arm assembly relative to the frame.

In an embodiment, the arm assembly includes a connecting arm. One end of the connecting arm is fixedly connected to a sample needle, and the other end of the connecting arm is fixedly connected to a spline shaft. The sample needle and the spline shaft locate on the same side of the connecting arm.

In an embodiment, the incubation disk module includes a first incubation disk and a second incubation disk, and both incubation disks rotate in motor-driven manner. A cuvette removing and discarding module is provided between the first incubation disk and the second incubation disk, the cuvette removing and discarding module includes a cuvette pushing rail and a cuvette discarding rail, and the cuvette pushing rail and the cuvette discarding rail are switched by means of a linear motor.

In an embodiment, the reagent disk module includes an open device and a first rotating part, which is set at the bottom of the open device and drives the open device to rotate. The side wall of the open device is provided with a scanning part, and a scanning device is capable of identifying an attribute of a reagent inside the open device by means of the scanning part.

In an embodiment, the bottom a rotation connecting partis provided at the bottom of the open device. The rotation connecting part is connected to the first rotating part, and a fixation seat is fixedly set at the rotation connecting part.

In an embodiment, a positioning device to obtain the position of a reagent compartment is provided on the first rotating part.

In an embodiment, the positioning device includes a sensor, which is fixed on a support body, and a sensor light-blocking sheet, which is set at the bottom of a rotation shaft.

In an embodiment, the reagent in a reagent disk is transferred to the reaction cuvette by means of a fluid system under the control of the reagent arm module. The fluid system includes:
a dispensing and rinsing system, which dispenses the sample and the reagent and rinses a sample needle and a reagent needle;
an acid cleaning system, which performs acid cleaning to the sample needle and the reagent needle; and
a waste discharging system, which discharges a waste cleaning liquid.

Preferably, the dispensing and rinsing system includes:
a sample allocating unit to allocate the sample;
a reagent allocating unit to allocate the reagent;
an inner rinsing unit to rinse the inner wall of the sample needle and the inner wall of the reagent needle; and
an outer rinsing unit to rinse the outer wall of the sample needle and the outer wall of the reagent needle.

In an embodiment, the acid cleaning system includes a sample needle cleaning tank and reagent needle cleaning tanks. An inlet of the sample needle cleaning tank and an inlet of the reagent needle cleaning tanks are respectively connected to each of outlets of acid cleaning liquid pumps. Inlets of the acid cleaning liquid pumps are respectively connected to first check valves, and the first check valves are all connected to an acid cleaning liquid bottle. An outlet of the sample needle cleaning tank and an outlet of the reagent needle cleaning tanks are respectively connected to the waste discharging system.

In an embodiment, the waste discharging system includes a negative pressure tank. A liquid inlet of the negative pressure tank is respectively connected to an outlet of a sample needle cleaning tank, and outlets of reagent needle cleaning tanks. A liquid outlet of the negative pressure tank is connected to an inlet of a waste liquid discharging pump via a third solenoid valve. An outlet of the waste liquid discharging pump is connected to an inlet of a waste liquid bottle. An air outlet of the negative pressure tank is connected to an inlet of the negative pressure pump.

In an embodiment, the detection module includes a light path detection system and a control system. The light path detection system includes:
an excitation light pathway switch to control conduction or blocking of an excitation light emitted by an excitation unit;
a signal light pathway switch to control the entrance into a receiving and detecting unit of a luminescence signal generated by the substance to be detected after the initiation; and
a second actuating part, a first end of which is connected to the excitation light pathway switch, and a second end of which is connected to a light reception pathway switch.

The second actuating part actuates the opening and closing of the excitation light pathway and the signal light pathway at the same time. When the excitation light pathway is opened, the signal light pathway is closed, and when the excitation light pathway is closed, the signal light pathway is opened.

In an embodiment, the excitation light pathway switch includes a second rotating part. Through holes are provided at a circumferential side wall of a first end of the second rotating part, which through holes are used to realize conduction of the excitation light, and a second end of the second rotating part is fastened to output shaft of a first end of the second actuating part.

Preferably, there are two through holes, and the two through holes at the circumferential side wall of the first end of the second rotating part are opposite to each other.

In an embodiment, the light path detection system includes an excitation unit. The excitation unit includes a first housing base. The first end of the second rotating part extends through one side wall of the first housing base into the interior of the first housing base; the through holes are set inside the first housing base; the circumferential side wall of the second rotating part is rotatably connected to one side wall of the first housing base; and the top and the bottom of the first housing base are both provided with an excitation light channel.

In an embodiment, a transflective lens, which transmits the excitation light and reflects luminescence signals generated by the substance to be detected after the excitation with the excitation light, is set at a position at the side of the second rotating part and away from the excitation unit.

In an embodiment, a first lens, which focuses the luminescence signals generated by the substance to be detected, is set at the side of the transflective lens, and the first lens is close to the signal light pathway switch.

Preferably, tan optical filter is provided at the side of the first lens close to the signal light pathway switch.

In an embodiment, the transflective lens, the first lens and the optical filter are all set inside a second housing base. The top of the second housing base is fastened to the bottom of the first housing base; a first opening is provided on one side wall of the second housing base, which first opening transmits the luminescence signals generated by the substance to be detected and leads to a signal light pathway switch; and a second opening is provided at the bottom of the second housing base, which second opening is set to match the substance to be detected.

In an embodiment, the excitation unit includes a laser to emit the excitation light, and the excitation light emitted by the laser excites, multiple times, the substance to be detected, such that the substance to be detected generates a plurality of luminescence signals. The light path detection system further includes the receiving and detecting unit. The receiving and detecting unit includes a detector, which detects, multiple times, the luminescence signals generated by the substance to be detected and records corresponding detection results.

In an embodiment, a second lens to focus the excitation light is set at a position between the laser and the second rotating part.

In an embodiment, the signal light pathway switch includes:
a baffle, which is fastened to the receiving and detecting unit, and a third opening corresponding to the first opening is provided on the baffle; and
a crank linkage device, which is set at the side of the baffle close to the first opening.

In an embodiment, the crank linkage device includes:
a first rotating component, which is fastened to output shaft of the second end of a driving device; and
a second rotating component, which is rotatably connected to the first rotating component, and a fourth opening is provided on the second rotating component.

The first rotating component and the second rotating component are both rotatably connected to the baffle.

In an embodiment, when the excitation light is conducted to excite the substance to be detected, the fourth opening is staggered with the first opening and the third opening, and at this time, the signal light pathway switch is in a closed state.

In an embodiment, when the luminescence signals generated by the substance to be detected enter the receiving and detecting unit, the first opening and the third opening are aligned with the fourth opening, and a signal light pathway switch is in an opened state; and at this time, the excitation light pathway switch blocks the excitation light.

In an embodiment, the fully automatic light initiated chemiluminescence detector further includes an emergency position. A corresponding sensor is set on the emergency position. When the sensor senses that an emergency sample is placed at the emergency position, the sampling arm module sucks the sample at the emergency position first to perform detection of the emergency sample. After sucking of the emergency sample is finished, sucking of the sample in the ordinary rail sample loading module is continued.

In an embodiment, the fully automatic light initiated chemiluminescence detector further includes a sample diluent compartment. There are at least two kinds of sample diluents in the sample diluent compartment, and the sampling arm module sucks the diluent to dilute the sample.

Compared with the existing technologies, the fully automatic light initiated chemiluminescence detector of the present disclosure has the following advantages.
1. A tube analyzer replaces a plate analyzer or a strip analyzer in the existing technologies, which avoids a difference between detections caused by differences in the detection environment and the detection time. The tube analyzer ensures that conditions for the detections are consistent in the environment and the time, so that detection results are more stable and accurate.
2. The fully automatic light initiated chemiluminescence detector of the present disclosure is provided with a rail sample loading module, so that a detection sample can be added randomly without stopping the detections and that two adjacent test tube racks can be loaded at the same time, which improves the detection efficiency.
3. The fully automatic light initiated chemiluminescence detector of the present disclosure is provided with a cuvette sorting module which is capable of sorting disordered reaction cuvettes into ordered reaction cuvettes so as to effectively prevent a malfunction caused by a stuck cuvette and improve the detection efficiency of samples.
4. The whole operation of the fully automatic light initiated chemiluminescence detector of the present disclosure is automatic, so that problems, such as individual differences, manual errors, non-standard actions and other uncertainties, in the manual operation can be effectively avoided, and the accuracy of the chemiluminescence immunoassay can be improved.
5. In the existing technologies, it is required to manually take out a reagent and store it in a refrigerator after the detection each day, and it is required to take out the reagent from the refrigerator and put it into an instrument the next day. The fully automatic light initiated chemiluminescence detector of the present disclosure has a reagent disk module which is provided with a refrigeration device. In this way, it is unnecessary to take out an unspent reagent and store it in another device, and the unspent reagent can be directly stored in the detector until the reagent is used up. Besides, there is a great amount of water evaporation when the reagent is positioned on an analyzer in the existing technologies, which affects the detection result. An instrument system of the present disclosure ensures a small amount of evaporation for the reagent.
6. The fully automatic light initiated chemiluminescence detector of the present disclosure uses a fluid system for control. By disposing a dispensing and rinsing system, an acid cleaning system and a waste discharging system, multiple functions such as storage of a sample liquid, sample loading, and collection of a waste liquid can be realized, and the degree of automation is high; and moreover the fully automatic light initiated chemiluminescence detector of the present disclosure has functions of real-time monitoring and automatic protection, so that safety and reliability of the system can be improved.
7. The optical detection system used in the fully automatic light initiated chemiluminescence detector of the present disclosure is capable of performing multiple times of collecting and analyzing of chemiluminescence signals generated by exciting samples, which can effectively avoid the occurrence of the Hook effect.

The above technical features can be combined in various suitable ways or replaced by equivalent technical features, as long as the objective of the present disclosure can be achieved.

### Brief Description of the Drawings

The present disclosure will be described in a more detailed way below based on embodiments, which are only non-limiting embodiments, and with reference to the accompanying drawings, in which:
Fig. 1 shows a plane layout of a fully automatic light initiated chemiluminescence detector of the present disclosure;
Fig. 2 schematically shows a cuvette sorting module of the fully automatic light initiated chemiluminescence detector shown in Fig. 1;
Fig. 3 schematically shows a structure of a first driving part of the cuvette sorting module shown in Fig. 2;
Fig. 4 schematically shows a structure of the first driving part shown in Fig. 3 in which a first connection shaft is connected to a cuvette off-loading member;
Fig. 5 schematically shows a structure of the cuvette sorting module shown in Fig. 2 in which a linkage mechanism is connected to a toggle wheel;
Fig. 6 schematically shows a structure of the linkage mechanism shown in Fig. 5 in which a first toggle bar is set in a toggle groove;
Fig. 7 schematically shows a structure of the linkage mechanism shown in Fig. 5 in which the first toggle bar rotates clockwise;
Fig. 8 schematically shows a cuvette delivering module of the fully automatic light initiated chemiluminescence detector shown in Fig. 1;
Fig. 9 schematically shows a rail sample loading module of the fully automatic light initiated chemiluminescence detector shown in Fig. 1;
Fig. 10 schematically shows a sampling arm module of the fully automatic light initiated chemiluminescence detector shown in Fig. 1;
Fig. 11 schematically shows a reagent disk module of the fully automatic light initiated chemiluminescence detector shown in Fig. 1;
Fig. 12 schematically shows a stereo structure of a second rotating part of the reagent disk module shown in Fig. 11;
Fig. 13 schematically shows a fluid system of the fully automatic light initiated chemiluminescence detector shown in Fig. 1;
Fig. 14 schematically shows alight path detection system of the fully automatic light initiated chemiluminescence detector shown in Fig. 1;
Fig. 15 shows a front view of the light path detection system shown in Fig. 14;
Fig. 16 schematically shows a view when an excitation light channel of the light path detection system shown in Fig. 14 is opened;
Fig. 17 schematically shows a view when the excitation light channel of the light path detection system shown in Fig. 14 is closed;
Fig. 18 schematically shows a structurestate of a signal light pathway when the excitation light path is opened as shown in Fig. 16; and
Fig. 19 schematically shows a structure state of the signal light pathway when the excitation light path is opened as shown in Fig. 17.

In the accompanying drawings, same components are indicated by same reference signs. The accompanying drawings are not drawn according to actual proportions.

In the drawings, indications of respective reference signs are as follows:
1. rail sample loading module; 2. emergency position; 3. sampling arm module; 4. sample diluent compartment; 5. first incubation disk; 6. first reagent arm; 7. fluid system; 8. first reagent disk; 9. second reagent disk; 10. control system; 15. second reagent arm; 12. light path detection system; 13. second incubation disk; 14. cuvette removing and discarding module; 11. third reagent arm; 16. cuvette delivering module; 17. cuvette sorting module; 18. frame; 20. second check valve; 21. sample needle external rinsing water pump; 22. first solenoid valve; 23. sample needle dispensing pump; 25. sample needle internal rinsing water pump; 26. reagent needle dispensing pump; 27. reagent needle; 28. second solenoid valve; 29. reagent needle internal rinsing water pump; 30. air filter; 31. clean water tank; 32. first liquid level sensor; 33.water inlet pump; 34. water inlet valve; 35. reagent needle cleaning tank; 36. sample needle cleaning tank; 37.acid cleaning liquid pump; 38. first check valve; 39.acid cleaning liquid bottle; 40. second liquid level sensor; 41. silencer; 42. pressure sensor; 43. negative pressure pump; 44. negative pressure tank; 45. third liquid level sensor; 46. third solenoid valve; 47. waste liquid discharging pump; 101. recycling pushing member; 102. first conveyor belt; 103. test tube rack; 104. first positioning device; 105. test tube type discriminator; 106. circulation pushing member; 107. test tube barcode scanner; 109. second conveyor belt; 121. excitation unit; 122.excitation light pathway switch; 123. second actuating part; 124. signal light pathway switch; 125. detection member; 126. optical filter; 127. first lens; 128. transflective lens; 131. laser; 132. second lens; 133. lens holder; 134. laser holder; 135. excitation light channel; 136. first housing base; 137. second rotating part; 138. second housing base; 139. second opening; 140. crank linkage device; 141. baffle; 142. third opening; 143. fourth opening; 144. first rotating component; 145. second rotating component; 129. through hole; 160. reaction cuvette; 161. reaction cuvette claw; 162. stepper motor; 163. synchronous belt wheel; 164. first synchronous belt; 165. idler wheel; 166. slide rail; 167. electromagnet; 168. first photoelectric sensor; 169. slide channel; 1611. reset device; 1612. slider; 1613. sliding groove; 170. cuvette groove; 171. cuvette accommodation part; 172. reaction cuvette rotating disk; 173. reaction cuvette slide channel; 174. first actuating part; 175. first actuating device; 176. longitudinal guide groove; 177. horizontal guide groove; 178. friction wheel; 179. electromagnet guide part; 180. limit bar; 181. first cuvette off-loading groove; 182. reaction cuvette slide channel base; 183. second cuvette off-loading groove; 301. sample needle; 302. connecting arm; 303. spline shaft; 304. rotary motion assembly; 305. vertical motion assembly; 306. first motor; 307. first driving wheel; 308. second synchronous belt; 309. moving block; 310. second motor; 311. second driven wheel; 312. rotating block; 331. toggle wheel; 332. cuvette off-loading member; 333. first connecting shaft; 334. linkage mechanism; 335. torsion spring; 336. first toggle bar; 337. first rotating shaft; 338. first linking bar; 339. second linking bar; 340. second connecting shaft; 801. fixation seat; 802. test container; 803. open device; 804. refrigeration device; 805. scanning part; 806. first rotating part; 807. support body; 808. sensor; 809. rotation shaft; 810. sensor light-blocking sheet; and 811. second positioning device.

### Detailed Description of the Embodiments

The present disclosure will be further described in detail below with reference to the accompanying drawings and specific embodiments. It should be noted that, as long as there is no conflict, respective embodiments in the present disclosure and respective features in the respective embodiments can be combined with one another, and the obtained technical solutions are within the protection scope of the present disclosure.

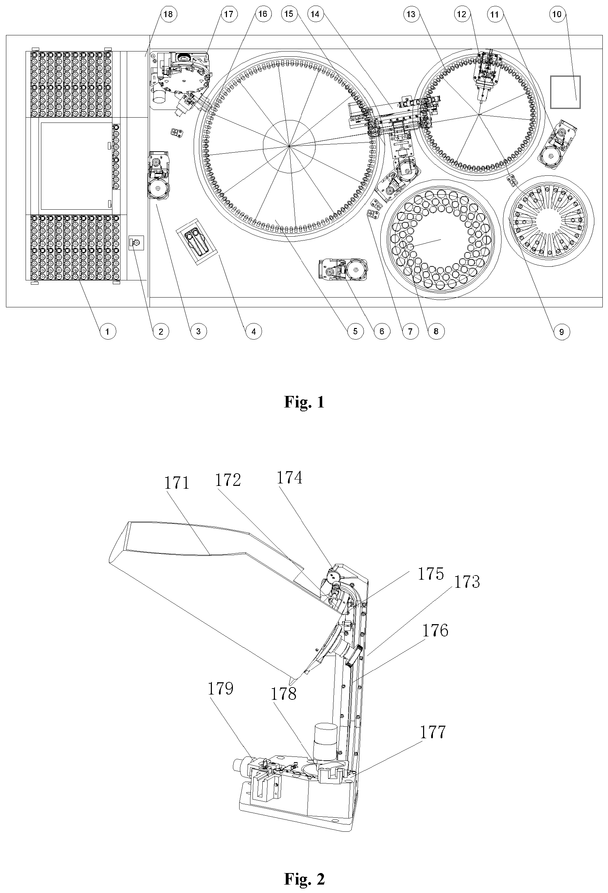

As shown in Fig. 1, a fully automatic light initiated chemiluminescence detector includes a sample loading module 1, a sampling arm module 3, an incubation disk module, a reagent disk module, and a reagent arm module. The sample loading module 1 locates at one side of a frame 18, and the sampling arm module 3 locates at one side of the sample loading module 1. The sampling arm module 3 transfers a sample in the sample loading module 1 to a reaction cuvette 160 located on the incubation disk module. After the reaction cuvette 160is rotated along with an incubation disk and arrives at a specified position, the reagent arm module located between the reagent disk module and the incubation disk module transfers a reagent in the reagent disk module to the reaction cuvette. The sample and the reagent in the reaction cuvette 160 are mixed in the incubation disk, and transferred to a detection module after the incubation.

In an embodiment, the fully automatic light initiated chemiluminescence detector of the present disclosure further includes a cuvette sorting module 17. As shown in Fig. 1 and Fig. 2, the cuvette sorting module 17 locates behind the sampling arm module 3, and the cuvette sorting module 17 includes a cuvette accommodation part 171 for accommodating the reaction cuvette and a cuvette off-loading device located at the bottom of the cuvette accommodation part 171. An opening is set on the side of the cuvette accommodation part 171, and the opening extends along the side of the cuvette accommodation part 171 from the top to the bottom. The opening transits in an arc shape along the side of the cuvette accommodation part 171 from the top to the middle, so that a volume of the cuvette accommodation part 171 gradually increases from the top to the middle. An inner wall of the cuvette accommodation part 171 is set to be smooth. Under action of the smooth inner wall of the cuvette accommodation part 171, the reaction cuvette 160 is enabled to enter the cuvette off-loading device quickly.

The cuvette off-loading device includes a tray fastened to the bottom of the cuvette accommodation part 171 and a reaction cuvette rotating disk 172 set in the tray. A cuvette groove, is provided at a circumferential edge of the top of the reaction cuvette rotating disk 172 (a position where the reaction cuvette rotating disk 172 is in contact with the reaction cuvette 160), which matches the reaction cuvette 160. A first actuating part 174 to actuate the off-load of the reaction cuvette 160 from the cuvette groove 170 is set at one side of the reaction cuvette rotating disk 172. The reaction cuvette rotating disk 172 is driven to rotate by a first actuating device 175. Under action of rotation the reaction cuvette rotating disk 172, the reaction cuvette 160 located at the bottom of the cuvette accommodation part 171 can be placed in the cuvette groove 170 in sequence, and then under action of the first actuating part 174, the reaction cuvette 160 is offloaded from the cuvette groove 170 uniformly.

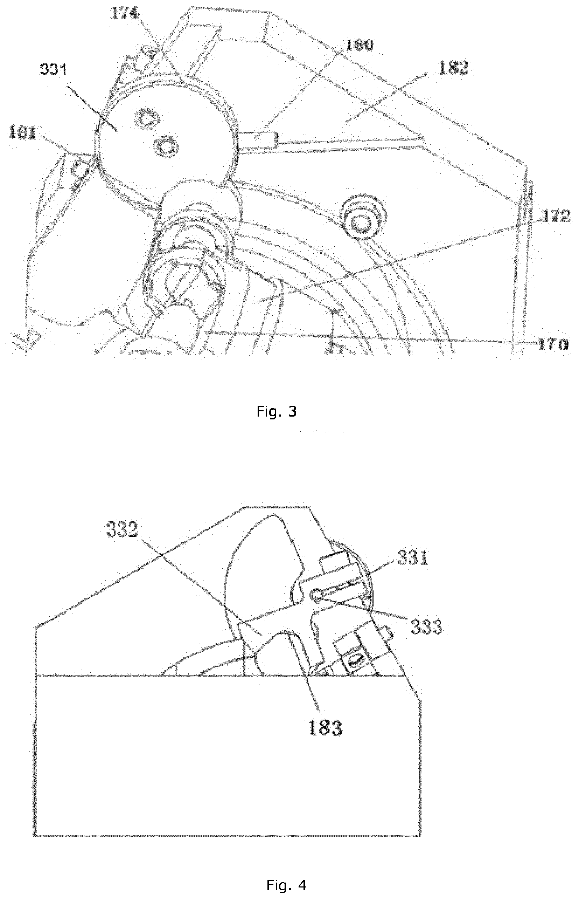

As shown in Figs. 3 and 4, the first actuating part 174 includes a toggle wheel 331 to actuate the reaction cuvette 160 to be offloaded from the cuvette groove 170, and the toggle wheel 331 is provided thereon with a first cuvette off-loading groove 181 which matches the reaction cuvette 160. During rotation of the reaction cuvette rotating disk 172, the reaction cuvette 160 can be offloaded from the cuvette groove 170 in sequence by means of the first cuvette off-loading groove 181.

As shown in Figs. 3 and 4, the first actuating part 174 further includes a cuvette off-loading member 332 to actuate the off-load of the reaction cuvette 160 from the cuvette groove 170. The cuvette off-loading member 332 is connected to the toggle wheel 331 via a first connecting shaft 333 (a central shaft for rotation of the toggle wheel 331). A second cuvette off-loading groove 183, which matches the reaction cuvette 160, is provided on the cuvette off-loading member 332. The second cuvette off-loading groove 183 is parallel to the first cuvette off-loading groove 181. Under combined action of the second cuvette off-loading groove 183 and the first cuvette off-loading groove 181, the reaction cuvette 160 can be offloaded from the cuvette groove 170 smoothly. The first cuvette off-loading groove 181 matches an annular flange on the top of the reaction cuvette 160, and the second cuvette off-loading groove 183 matches the bottom of a cuvette body of the reaction cuvette 160. In the process of the offload of the reaction cuvette 160, tilting of the reaction cuvette 160 can be prevented, so that the reaction cuvette 160 can be offloaded smoothly in a lying position.

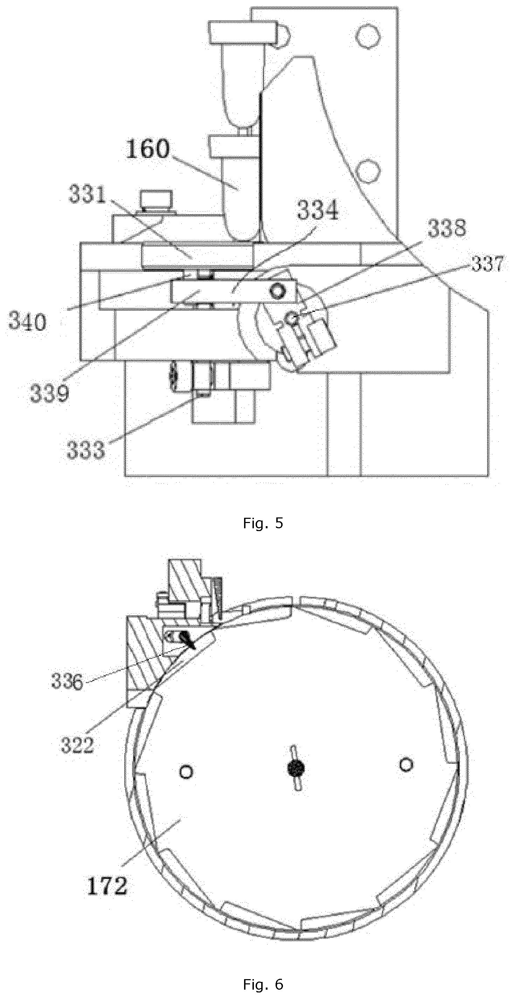

As shown in Figs. 4 and 5, the first actuating part 174 further includes a linkage mechanism 334 to actuate the periodic rotation of the toggle wheel. During anticlockwise rotation of the reaction cuvette rotating disk 172, periodical anticlockwise rotation of the toggle wheel can be realized.

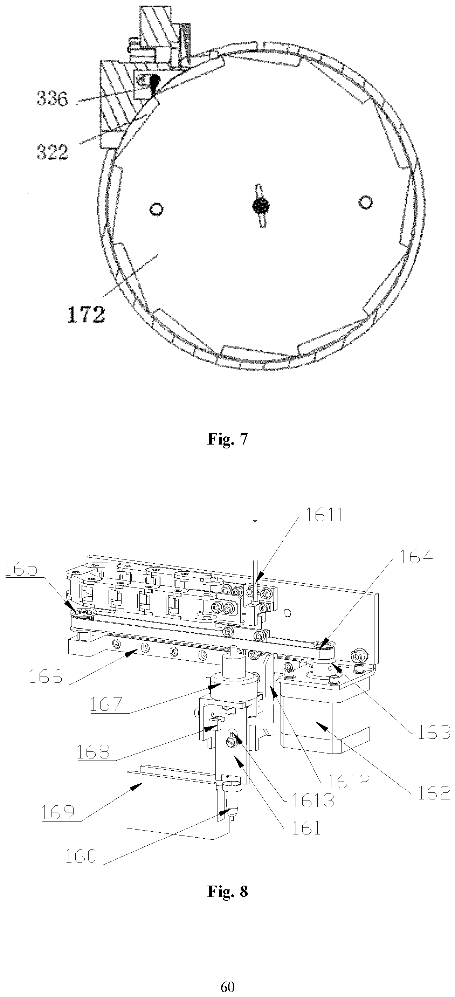

A toggle groove 322 corresponding to the cuvette groove 170 (as shown in Fig. 6 and Fig. 7) is provided at a circumferential edge at the bottom of the reaction cuvette rotating disk 172. As shown in Fig. 4 to Fig. 7, the linkage mechanism 334 includes a first toggle bar 336. A first end of the first toggle bar 336 is slidable in the toggle groove 322, and a second end of the first toggle bar 336 is fastened to a first rotating shaft 337. The first rotating shaft 337 is rotatably connected to a reaction cuvette slide channel base 182, and the reaction cuvette slide channel base 182 is fixedly set at the side of the reaction cuvette rotating disk 172. A first linking bar 338 is fastened to the first rotating shaft 337, and a free end of the first linking bar 338 is fastened to a first end of a second linking bar 339, a second end of the second linking bar 339 being connected to the toggle wheel 331 via a second connecting shaft 340. When the reaction cuvette rotating disk 172 rotates anticlockwise, the first toggle bar 336 is driven to rotate clockwise periodically under action of the toggle groove 322. A specific process is as follows. During anticlockwise rotation of the reaction cuvette rotating disk 172, when the first end of the first toggle bar 336 locates in the toggle groove 322 and is not in contact with a groove wall of the toggle groove 322 (as shown in Fig. 6), the first toggle bar 336 does not rotate; when the first end of the first toggle bar 336 is in contact with the groove wall of the toggle groove 322 (as shown in Fig. 7), the first toggle bar 336 starts to rotate clockwise; and when the first end of the first toggle bar 336 is in contact with the groove wall of the toggle groove 322 again, the first toggle bar 336 starts to rotate clockwise again, so that periodical clockwise rotation of the first toggle bar 336 is realized. When the first toggle bar 336 rotates clockwise, the first rotating shaft 337 and the first linking bar 338 are driven to rotate; the first linking bar 338 drives the second linking bar 339 to move horizontally; and the second linking bar 339 actuates the toggle wheel 331 to rotate anticlockwise via the second connecting shaft 340. The first toggle bar 336 rotates periodically so as to actuate the periodic rotation of the toggle wheel 331.

The first connecting shaft 333 is sheathed with a torsion spring 335 realize automatic resetting of the toggle wheel 331. A first end of the torsion spring 335 is fastened to the reaction cuvette slide channel base 182, and a second end of the torsion spring 335 is fastened to the toggle wheel 331. The toggle wheel 331 rotates anticlockwise so as to actuate the first cuvette off-loading groove 181 and the second cuvette off-loading groove 183 to jointly offload the reaction cuvette 160. Under action of the torsion spring 335, the toggle wheel 331 is enabled to rotate back clockwise so as to reset.

A limit bar 180 to ensure the normal reset of the toggle wheel 331 is further set on the toggle wheel 331. When the toggle wheel 331 rotates back clockwise to a normal state, a free end of the limit bar 180 is blocked by a side wall of the reaction cuvette slide channel base 182, so as to prevent excessive rotation of the toggle wheel 331 when the toggle wheel 331 rotates back clockwise to reset.

As shown in Fig. 2 and Fig. 3, a reaction cuvette slide channel 173, which leads to the cuvette groove 170, is provided inside of the reaction cuvette slide channel base 182. A longitudinal guide groove 176 is provided on the reaction cuvette slide channel 173. A horizontal guide groove 177, which is in communication with the longitudinal guide groove 176, is transversely set at the bottom of the longitudinal guide groove 176. A second actuating device to actuate the reaction cuvette 160 in the horizontal guide groove 177 sliding along the horizontal guide groove 177 to an end thereof in turn, is set at one side of the horizontal guide groove 177.

In an embodiment, the second actuating device includes a driving motor and a friction wheel 178 which is fastened to an output shaft of the driving motor and is used to control the movement of the reaction cuvette 160. The driving motor drives the friction wheel 178 to rotate, and during rotation of the friction wheel 178, a circumferential side surface of the friction wheel 178 is in contact with a flange of the reaction cuvette 160. By means of an acting force between the friction wheel 178 and the reaction cuvette 160, the reaction cuvette 160 is driven to move along a horizontal guide groove 177 to the end thereof in an upright position.

Preferably, an electromagnet guide part 179 to control the reaction cuvette to be offloaded from the horizontal guide groove 177 uniformly is set at the end of the horizontal guide groove 177, and a contact sensor is set at a start of the electromagnet guide part 179.

The reaction cuvette in the horizontal guide groove 177 stops moving when being in contact with the contact sensor of the electromagnet guide part 179.

The cuvette sorting module 17 is capable of sorting disordered reaction cuvettes into ordered reaction cuvettes, and the ordered reaction cuvettes are delivered to the first incubation disk 5 in sequence via a cuvette delivering module 16, which improves the detection efficiency of the samples. The reaction cuvette 160 is first put into the cuvette accommodation part 171 through the opening, and the first actuating device actuates the reaction cuvette rotating disk 172 to rotate anticlockwise, so that the reaction cuvette 160 in the cuvette accommodation part 171 enters the cuvette groove 170 in sequence. The reaction cuvette rotating disk 172 rotates anticlockwise to drive the toggle wheel 331 to rotate anticlockwise periodically, so that the reaction cuvette 160 in the cuvette groove 170 can be transported to the reaction cuvette slide channel 173 in sequence, in a lying position, and uniformly; and then the reaction cuvette 160 enters the longitudinal guide groove 176 and the horizontal guide groove 177 sequentially. When a malfunction caused by a stuck cuvette occurs at the reaction cuvette rotating disk 172, idling of a first motor is realized under action of a friction clutch in the first actuating device, so that the reaction cuvette 160 stuck at the reaction cuvette rotating disk 172can be taken out conveniently. When the quantity of the reaction cuvette 160 in the longitudinal guide groove 176 reaches a level where a sensor indicates that the longitudinal guide groove 176 is filled therein with the reaction cuvette 160, the reaction cuvette rotating disk 172 stops rotating. A second motor drives the friction wheel 178 to move, and ensures that the friction wheel 178 is in contact with the reaction cuvette 160, so as to control the reaction cuvette 160 to move from a start of the horizontal guide groove 177 to the end thereof in sequence, in an upright position, and uniformly. After the reaction cuvette 160 at the end of the horizontal guide groove 177 is in contact with a contact sensor, the reaction cuvette 160 stops moving, so as to achieve the objective of sorting disordered reaction cuvettes 160.

In an embodiment, the fully automatic light initiated chemiluminescence detector of the present disclosure further includes the cuvette delivering module. As shown in Fig. 1 and Fig. 8, the cuvette delivering module locates between the cuvette sorting module 17 and the incubation disk module, and includes a slide rail 166, a cuvette holding device, a transmission device, a slide channel and a reset device 1611. The cuvette holding device is slidably connected to the slide rail 166. The transmission device locates above the slide rail 166, and can control the movement of the cuvette holding device along the slide rail 166. The slide channel 169 locates below the cuvette holding device, and the reaction cuvette 160 locates inside the slide 169. The cuvette holding device can control the movement of the reaction cuvette 160 inside the slide 169. The reset device 1611 can enable the reset of the cuvette holding device. Preferably, the reset device 1611 is fixed above one end of the slide rail 166.

The cuvette holding device includes: a slider 1612, a reaction cuvette claw 161, an electromagnet 167 and a first photoelectric sensor 168. The slider 1612 is slidably engaged with the slide rail 166. The reaction cuvette claw 161 is set at one side of the slider 1612 and the reaction cuvette claw 161 slides vertically relative to the slider 1612. The reaction cuvette claw 161 is provided with a sliding groove 1613 which allows a stop screw to pass through, and the stop screw passes through the sliding groove 1613 and connects the reaction cuvette claw 161 to the slider 1612. An electromagnet 167, which controls the reaction cuvette claw 161 to slide vertically relative to the slider 1612, is set above the reaction cuvette claw 161. The electromagnet 167 is fixedly connected to the slider 1612. When the electromagnet 167 is powered on, the reaction cuvette claw 161 goes away from electromagnet 167 and moves downward along the sliding groove 1613. When the electromagnet 167 is not powered on, the reaction cuvette claw 161 is adsorbed at a lower end of the electromagnet 167. The first photoelectric sensor 168 is set at one side of the reaction cuvette claw 161, and is used to detect a position of the reaction cuvette claw 161.

As shown in Fig. 8, the bottom of the reaction cuvette 160 is in a hemispherical shape, and the cuvette body of the reaction cuvette 160 is in a cylindrical shape. A cylindrical projection is provided in the center of the bottom of the reaction cuvette 160. A cuvette rim projecting outward is provided around the circumference of the opening of the reaction cuvette 160, and a diameter of the cuvette rim is greater than a diameter of the cuvette body of the reaction cuvette 160. A limit groove is set at the bottom of the reaction cuvette claw 161, and the limit groove engages the reaction cuvette 160. The limit groove has a length that is the same as the diameter of the cuvette rim. When the reaction cuvette 160 is moved, the cuvette rim of the reaction cuvette 160 is engaged in the limit groove, so that the reaction cuvette 160 moves with the movement of the reaction cuvette claw 161. Since the reaction cuvette claw 161 moves to the cuvette rim of the reaction cuvette when the electromagnet is powered on, the reaction cuvette 160 only moves horizontally in the slide 169 along with the reaction cuvette claw 161, rather than moving vertically, dropping of the reaction cuvette does not occur. Moreover, the reaction cuvette claw has a simple structure, and is easy to assemble and process.

Preferably, the cuvette holding device and the slide rail 166 are set to be perpendicular to each other. An idler wheel 165 and a synchronous belt wheel 163 are respectively set at two ends of the slide rail 166 above the slide rail 166, and the idler wheel 165 and the synchronous belt wheel 163 are connected together via a first synchronous belt 164. The cuvette holding device is vertically connected to the first synchronous belt 164 and the first synchronous belt 164 is driven to rotate by a stepper motor 162. When the first synchronous belt 164 rotates, the cuvette holding device is driven to move along the slide rail 166 and between the cuvette sorting module 17 and the incubation disk module.

Preferably, the slide 169 locates below the reaction cuvette claw 161, and is parallel to the slide rail 166. The reaction cuvette claw 161 drives, by means of induction of the electromagnet 167, the reaction cuvette 160 to pass through the slide 169 and arrive at the incubation disk module. The reaction cuvette 160, which is sorted by the cuvette sorting module 17, locates at one end of the slide rail 166, and at this time, the electromagnet 167 is started. After sensing starting of the electromagnet 167, the first photoelectric sensor 168 drives a reaction cuvette claw 161 to move downward, and then an opening at the bottom of the reaction cuvette claw 161 engages the cuvette rim of the reaction cuvette 160. Meanwhile, the stepper motor 162 drives the first synchronous belt 164 to rotate so as to drive a reaction cuvette moving device to move along the slide rail 166 toward the first incubation disk 5. The reaction cuvette 160 passes through the slide 169, and arrives at the first incubation disk 5.

Preferably, the reset device 1611 is a second photoelectric induction sensor including an N-shaped groove which allows the cuvette holding device to pass through. After the electromagnet 167 is powered off, the reaction cuvette claw 161 moves upward until the first photoelectric sensor 168 detects that the reaction cuvette claw 161 passes through a U-shaped groove of the first photoelectric sensor. The reaction cuvette claw 161 is absorbed on the electromagnet 167 and is kept away from the reaction cuvette 160. At this time, the stepper motor 162 moves so as to drive the synchronous belt wheel 163 to rotate in a direction opposite to a direction of rotation when the reaction cuvette is delivered, and the first synchronous belt 164 drives the cuvette holding device to move in a direction opposite to a direction of rotation when the reaction cuvette is delivered. A process from delivering the reaction cuvette to resetting is completed when the cuvette holding device returns to the N-shaped groove of the reset device 1611 which is the second photoelectric sensor, i.e., the cuvette holding device returns to the other end of the incubation disk.

By means of the cuvette delivering module 16, the reaction cuvette 160 is capable of moving horizontally directly from the cuvette sorting module 17, through the slide 169, to the first incubation disk 5, so that problems such as ahigh error rate, cuvette dropping and low working efficiency caused when a three-dimensional mechanical arm gripper to grab the reaction cuvette 160 are avoided. In addition, the motor is a stepper motor, so that the belt wheel operates more stably when a belt transmission device is controlled for transmission.

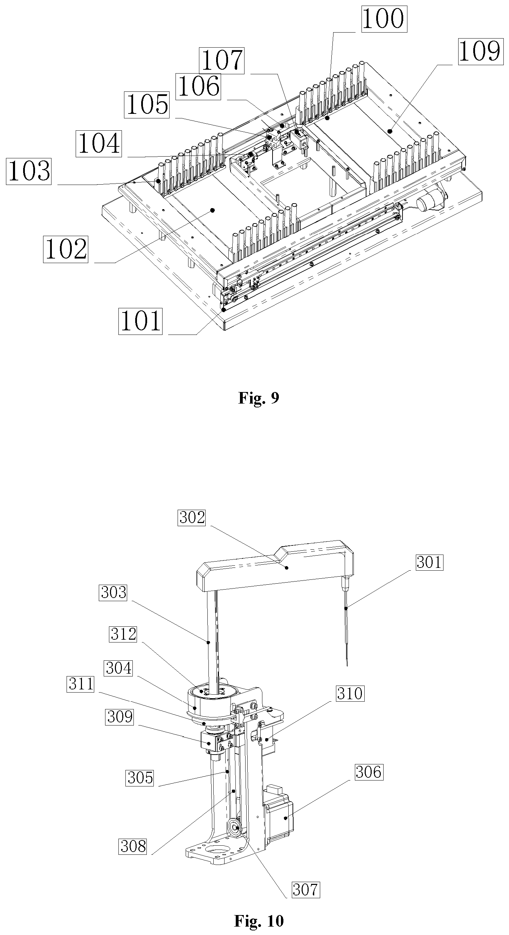

In an embodiment, as shown in Fig. 9, the sample loading module 1 includes several test tube racks 103 and a moving device, which are set on a baseplate of the sample loading module 1. The test tube racks 103 are moved to specified positions by means of the moving device.

In an embodiment, the moving device includes an X-axis pushing mechanism. The X-axis pushing mechanism includes a circulation pushing member 106, which actuates the operation of a further synchronous belt by means of a motor.

In an embodiment, blocking pieces are provided with intervals on the further synchronous belt along the direction of the further synchronous belt. The circulation pushing member 106 pushes the test tube racks forward section by section by means of the further synchronous belt with the blocking pieces. The circulation pushing member 106 may synchronously push two test tube racks in two adjacent rows to move at the same time, so that one test tube is sampled while the other test tube is scanned, which can greatly improve the detection efficiency of the light initiated chemiluminescence detector.

In an embodiment, the moving device further includes a Y-axis pushing mechanism. The Y-axis pushing mechanism is a conveyor device. The conveyor device is driven by a motor, and conveys the test tube rack 103 to the circulation pushing member 106.

In an embodiment, the X-axis pushing mechanism further includes a recycling pushing member 101 to recycle a sampled test tube.

Preferably, the recycling pushing member 101 locates opposite to the circulation pushing member 106. The moving direction of the test tube rack pushed by the recycling pushing member 101 is counter to the direction of the test tube rack pushed by the circulation pushing member 106.

In an embodiment, the conveyor device includes a first conveyor belt 102 and a second conveyor belt 109, conveying directions of which are counter to each other. The second conveyor belt 109 conveys the test tube rack 103 to the circulation pushing member 106, and the sampled test tube rack 103 is conveyed to the recycling pushing member 101 by the first conveyor belt 102.

In an embodiment, the sample loading module 1 further includes a test tube barcode scanner 107, a test tube type discriminator 105 and a first positioning device 104to determine a position for sampling a test tube. A scanning direction of the test tube barcode scanner 107 and a discrimination direction of the test tube type discriminator 105 face the test tube rack. The test tube barcode scanner 107 and the test tube type discriminator 105 are respectively used to collect barcode information of the test tube and discriminating a type of the test tube, so that relevant information is recorded, which ensures that detection is performed orderly. The first positioning device 104 positions a sampling position for the test tube to be sampled, so as to ensure that the test tube to be sampled arrives at a sampling position accurately. After sample barcode scanning and the test tube type discrimination to the test tube on the test tube rack 103 are completed, each sample is pushed to a sampling position.

Preferably, the test tube rack 103 is conveyed to circulation pushing member 106 by the second conveyor belt 109, and circulation pushing member 106 pushes the test tube rack 103 forward. When the test tube rack 103 passes by the test tube barcode scanner 107 and the test tube type discriminator 105, barcode scanning and type discriminating are performed automatically. Then the test tube rack 103 moves on, and when the first positioning device 104 senses that the test tube rack arrives at the sampling position, sampling is performed by the sampling arm module 3. After the sampling is finished, the test tube rack 103 moves on and arrives at the first conveyor belt 102, and then the test tube rack 103 is pushed toward the second conveyor belt 109 by the recycling pushing member 101.

In an embodiment, the test tube type discriminator 105 is provided with a first sensor and a second sensor. The first sensor locates above the second sensor. The first sensor and the second sensor are both provided with a detection rod which extends toward the test tube rack. The detection rod of the first sensor has a length that is greater than a length of the detection rod of the second sensor. There are two types of test tubes on the test tube rack 103, i.e., a test tube having a diameter of 13 mm and a test tube having a diameter of 16 mm. Since the detection rod of the first sensor has a length that is greater than a length of the detection rod of the second sensor, when the test tube having a diameter of 16 mm passes by the test tube type discriminator 105, both the detection rod of the first sensor and the detection rod of the second sensor are capable of touching the test tube, and two sensor signals are sensed at this time; however, when the test tube having a diameter of 13 mm passes by the test tube type discriminator 105, since the detection rod of the second sensor, i.e., the shorter detection rod is incapable of touching the test tube, only the sensor signal of the longer detection rod, i.e., the first sensor, is sensed at this time. Thus, based on the number of the sensed sensor signal, it is determined whether the type of the test tube passing by is the test tube having a diameter of 13 mm or the test tube having a diameter of 16 mm.

The sample loading module in the present disclosure is a rail sample loading module, so that a sample to be detected can be added randomly without stopping the detection, which improves the detection efficiency. Moreover, the test tub racks in two adjacent rows can be pushed forward synchronously, so that sampling is performed to one test tube while barcode scanning is performed to a next tube, which improves the speed of sample loading and thereby improves the speed of sample detection.

As shown in Fig. 10, in an embodiment, the sampling arm module 3 includes a frame and an arm assembly. The arm assembly is set at an upper portion of the frame. A vertical motion assembly 305 and a rotary motion assembly 304 are provided on the frame. The vertical motion assembly 305 enables the vertical movement of the arm assembly vertically relative to the frame, and the rotary motion assembly 304 enables the rotation of the arm assembly relative to the frame.

The arm assembly includes a connecting arm 302. One end of the connecting arm 302 is fixedly connected to a sample needle 301 which is perpendicular to the connecting arm 302, and the other end of the connecting arm 302 is fixedly connected to a spline shaft 303 which is perpendicular to the connecting arm 302. The spline shaft 303 may transfer motion in a linear direction, and may also transfer torque in a circumferential direction. The sample needle 301 is fixedly connected with the spline shaft 303 via the connecting arm 302, so that the sample needle 301 is capable of moving with the vertical movement or rotary movement of the spline shaft 303.

In an embodiment, the vertical motion assembly 305 includes a first motor 306; the first motor 306 is connected to a first driving wheel 307; the first driving wheel 307 is connected to a first driven wheel via a second synchronous belt 308; a moving block 309 is fixed on the second synchronous belt 308; and a lower end of the spline shaft 303 extends through the moving block 309. When the first motor 306 is started, the first motor 306 drives the first driving wheel 307 to rotate so as to drive the second synchronous belt 308 to rotate; the moving block 309 moves vertically with rotation of the second synchronous belt 308; and the spline shaft 303 moves with vertical movement of the moving block 309 so as to drive the sample needle 301, which is fixedly connected with the spline shaft 303 via the connecting arm 302, to move vertically.

Preferably, blocking rings are provided at both an upper end and a lower end of the moving block 309 to prevent the spline shaft 303 from moving vertically relative to the moving block.

In an embodiment, the rotary motion assembly 304 includes a second motor 310; the second motor 310 is connected to a second driving wheel; the second driving wheel is connected to a second driven wheel 311via a third synchronous belt; a rotating block is provided at an upper portion of the second driven wheel 311; the spline shaft 303 is sheathed by both the second driven wheel and the rotating block 312. When the second motor 310 is started, the second motor 310 drives the third synchronous belt to rotate, and the third synchronous belt drives the second driven wheel 311 to rotate. The second driven wheel 311 rotates so as to drive the spline shaft 303 to rotate. Since the spline shaft 303 is capable of rotating inside the rotating block 312 relatively, the spline shaft 303 moves with rotation of the second driven wheel 311 so as to drive the sample needle 301, which is fixedly connected with the spline shaft 303 via the connecting arm 302, to rotate.

Preferably, a flat key is set between the second driven wheel 311 and the spline shaft 303 so as to prevent the spline shaft 303 from rotating relative to the second driven wheel 311.

The sample needle 301 of the sampling arm module 3 is capable of moving with the vertical movement or rotation of the spline shaft 303. This structure enables the sample needle 301 to load a sample or a reagent in different positions; since there is only one stage of rotation, i.e., the rotation of the spline shaft, this structure is small, simple, convenient to assemble and maintain, and low in cost; and since a combination of the rotation and the vertical movement is used, a motion trail of the sample needle 301 is definite, so that a high speed, a low error rate and a high precision can be achieved.

As shown in Fig. 1, in an embodiment, the incubation disk module includes a first incubation disk 5 and a second incubation disk 13, and each of the incubation disks is driven to rotate by a motor. A cuvette removing and discarding module 14is provided between the first incubation disk 5 and the second incubation disk 13. The cuvette removing and discarding module 14 includes a cuvette pushing rail and a cuvette discarding rail, and the cuvette pushing rail and the cuvette discarding rail are switched by means of a linear motor. When an incubation time for a reaction cuvette in the first incubation disk 5 is up, the reaction cuvette 160 is rotated to a reaction cuvette removing position of the first incubation disk 5. Meanwhile, a reaction cuvette in the second incubation disk 13 is also rotated to the reaction cuvette removing position. At this time, the cuvette removing and discarding module 14 is started and switches a rail to the cuvette discarding rail, so as to discard the reaction cuvette in the second incubation disk 13; and then the cuvette removing and discarding module 14 switches the rail to the cuvette pushing rail, so as to push a detection reaction cuvette in the first incubation disk 5 to the second incubation disk 13.

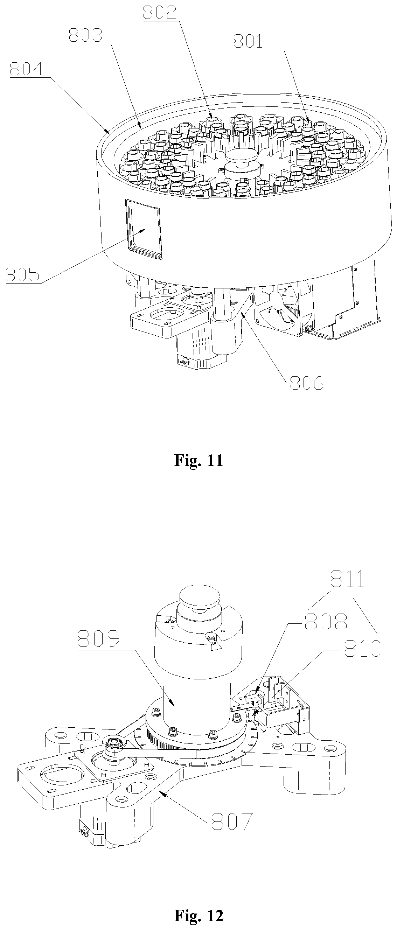

As shown in Fig. 11, in an embodiment, the reagent disk module includes an open device 803 and a first rotating part 806 which is set at the bottom of the open device 803 and drives the open device 803 to rotate. The side wall of the open device 803 is provided with a scanning part 805, and a scanning device is capable of identifying an attribute of a reagent inside the open device 803 by means of the scanning part 805. Preferably, open device 803 is a reagent compartment.

Specifically, the scanning part 805 is a through hole which is set in a side surface of the open device 803. The reagent inside the open device 803 is set in a test container 802, and a label on the test container 802 can be seen via the through hole. The test container 802 may be a reagent bottle, a test tube, a beaker or a flask.

Further, the scanning part 805 is at the same level with the label on the test container 802 to facilitate scanning of the label on the test container 802 by the scanning device, such as a card reader or a scanner, so that a step of manual scanning and identifying by an operator is avoided, which reduces the risk of errors.

In addition, the scanning device transmits scanned information of the test container 802 at a current position (i.e., a reagent suctioning port) to a controller. The controller determines whether a reagent in the test container 802 at the current position is a desired reagent. If the reagent is the desired reagent, a reagent arm operates; and if the reagent is not the desired reagent, the first rotating part 806 is driven to rotate so as to rotate a test container 802 at a next position to the current position, and the above process is repeated. Therefore, by means of the above automatic scanning function, consistency of results can be maintained.

Further, a fixing device is provided in the reagent compartment. The test container 802 is set on the fixing device, and the fixing device and the test container 802 rotate along with the reagent compartment.

In an embodiment, a rotation connecting part is provided at the bottom of the reagent compartment. The rotation connecting part is connected to the first rotating part 806, and the fixing device is fixedly connected to the rotation connecting part. The rotation connecting part is a swivel plate, and a center of the bottom of the swivel plate is connected to the first rotating part 806.

In an embodiment, a second positioning device 811 to read a position of the reagent compartment is provided on the first rotating part. Specifically, the second positioning device 811 includes a sensor 808 which is fixed on a support body 807 and a sensor light-blocking sheet 810 which is set at the bottom of a rotation shaft 809. An initial position of the swivel plate can be determined by the sensor 808 and the sensor light-blocking sheet 810, and a desired test container can be positioned to the current position based on the initial position.

Specifically, the support body 807 is in a shape of a flat board. A synchronous belt together with a big synchronous wheel and a small synchronous wheel connected to the synchronous belt are respectively provided at an upper portion of the support body 807. The big synchronous wheel is connected to the rotation shaft 809, and the small synchronous wheel is driven by a motor. Certainly, the rotation shaft 809 can be connected to the motor via a gear mechanism or a chain mechanism, and details are not repeated herein.

Specifically, the sensor 808 includes a zero-position sensor and a position sensor set below the zero-position sensor. The sensor light-blocking sheet 810 includes a zero-position light-blocking sheet and a coded disk, and the zero-position light-blocking sheet and the coded disk are respectively fixed at an upper end and a lower end of the big synchronous wheel. The zero-position light-blocking sheet, when rotating with the rotation shaft 809, passes by the zero-position sensor intermittently, and can calibrate a zero position of rotation. Multiple grooves are provided at equal angles on the coded disk, and each of the grooves corresponds to one test container. When the coded disk rotates with the rotation shaft, different grooves pass by the position sensor, so that position information of the test container can be obtained.

Preferably, a refrigeration device 804 is set outside the open device 803, and the bottom of the refrigeration device 804 is connected to the first rotating part 806. A rotation gap required for relative rotation is formed between the refrigeration device 804 and the open device 803. The reagent disk module is provided with a refrigeration device, so that it is unnecessary to take out an unspent reagent and store it in another device, and the unspent reagent can be directly stored in the detector until the reagent is used up. Besides, there is a great amount of water evaporation when the reagent is positioned on an analyzer in the existing technologies, which affects the detection result. An instrument system of the present disclosure ensures a small amount of evaporation for the reagent.

In an embodiment, fixation seats 801 is provided in the reagent compartment, and each of the fixation seats 801 fixes one of the above test containers 802. The first rotating part 806 drives the reagent compartment and the test containers 802 inside the reagent compartment to rotate together to make a test container 802 arrive at the reagent suctioning port, so that the reagent arm sucks the reagent in the test container 802.

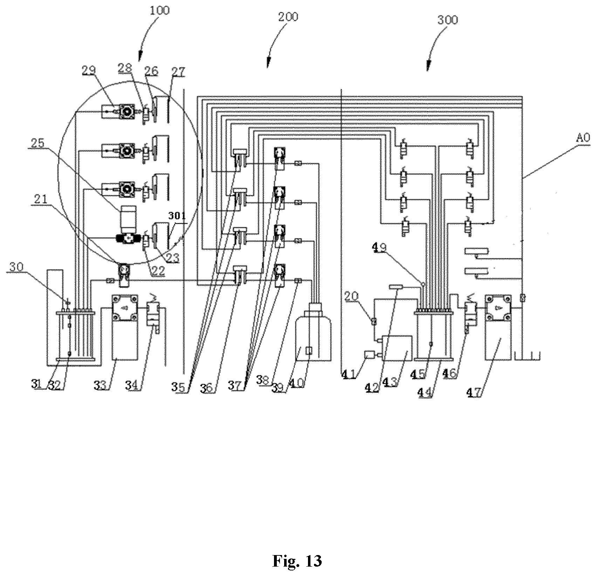

In an embodiment, the reagent in a reagent disk is transferred to the reaction cuvette by means of fluid system7 under the control of the reagent arm module. As shown in Fig. 13, the fluid system 7 includes: a dispensing and rinsing system 100, which dispenses the sample and the reagent and rinses the sample needle 301 and a reagent needle 27;
an acid cleaning system 200, which performs acid cleaning to the sample needle 301 and the reagent needle 27; and
a waste discharging system 300, which discharges a waste cleaning liquid.

In an embodiment, the dispensing and rinsing system 100 includes: a sample allocating unit to allocate the sample; a reagent allocating unit to allocate the reagent; an inner rinsing unit to rinse the inner wall of the sample needle 301 and the inner wall of the reagent needle 27; and an outer rinsing unit to rinse the outer wall of the sample needle 301 and the outer wall of the reagent needle 27.

In an embodiment, the dispensing and rinsing system 100 further includes a water supplying unit to supply water for rinsing to the inner rinsing unit and the outer rinsing unit.

In an embodiment, the sample allocating unit includes a sample needle dispensing pump 23 and a sample needle 301, and an outlet of the sample needle dispensing pump 23 is connected to an inlet of the sample needle 301.

In an embodiment, the reagent allocating unit includes a reagent needle dispensing pump 26 and a reagent needle 27, and an outlet of the reagent needle dispensing pump 26 is connected to an inlet of the reagent needle 27. It is understandable that there may be one or more reagent allocating units, and three reagent allocating units are disclosed in the present embodiment. As shown in Fig. 13, two reagent allocating units (in an area circled in Fig. 13) allocate the reagent, and another reagent allocating unit (in the area circled in Fig. 13) allocates a general-purpose liquid.

The inner rinsing unit includes a sample needle internal rinsing water pump 25 and a reagent needle internal rinsing water pump 29. An inlet of the sample needle internal rinsing water pump 25 and an inlet of the reagent needle internal rinsing water pump 29 are both connected to an outlet of the water supplying unit. An outlet of the sample needle internal rinsing water pump 25 is connected to a first solenoid valve 22, and the first solenoid valve 22 is connected to an inlet of the sample needle dispensing pump 23. An outlet of the reagent needle internal rinsing water pump 29 is connected to a second solenoid valve 28, and the second solenoid valve 28 is connected to an inlet of the reagent needle dispensing pump 26.

In an embodiment, the acid cleaning system 200 includes a sample needle cleaning tank 36 and reagent needle cleaning tanks 35. An inlet of the sample needle cleaning tank 36 and an inlet of the reagent needle cleaning tanks 35 are respectively connected to each of outlets of acid cleaning liquid pumps 37. Inlets of the acid cleaning liquid pumps 37 are respectively connected to first check valves 38, and the first check valves 38 are all connected to an acid cleaning liquid bottle 39. An outlet of the sample needle cleaning tank 36 and an outlet of the reagent needle cleaning tanks 35 are respectively connected to the waste discharging system 300.

During water rinsing, high-pressure water passes through the sample needle dispensing pump 23 and flows out of an inner space of the sample needle 301, so as to rinse the inner wall of the sample needle 301; and water flowing out of the sample needle 301 passes through a sample needle cleaning tank 36 and further cleans the outer wall of the sample needle 301. During internal water rinsing of the reagent needle 27, the high-pressure water passes through the reagent needle dispensing pump 26 and flows out of the reagent needle 27, so as to rinse the inner wall of the reagent needle 27; and water flowing out of the reagent needle 27 passes through a reagent needle cleaning tank 35 and further cleans the outer wall of reagent needle 27. However, the sample needle 301 has a small inner diameter, a water flow going out of the inner space of the sample needle 301per unit time is not sufficient to clean the sample needle 301 thoroughly. Thus, a sample needle external rinsing water pump 21 is added to increase the water flow in the sample needle cleaning tank 36, so as to clean the sample needle 301 thoroughly. The reagent needle 27 has a larger inner diameter, and water flow per unit time used in internal rinsing only is sufficient to clean reagent needle 27 thoroughly.

During performing of acid cleaning, a cleaning liquid passes through an acid cleaning liquid pump 37 and flows into the sample needle cleaning tank 36, and the sample needle 301sucks and discharges the cleaning liquid repeatedly for 10 times in the sample needle cleaning tank 36, so as to achieve the purpose of pickling the sample needle 301. When the reagent needle is pickled, the cleaning liquid passes through the acid cleaning liquid pump 37 and flows into the reagent needle cleaning tank 35, and the reagent needle sucks and discharges the cleaning liquid repeatedly for 10 times in reagent needle cleaning tank 35, so as to achieve the purpose of pickling the reagent needle 27.

In an embodiment, the waste discharging system 300 includes a negative pressure tank44. A liquid inlet of the negative pressure tank44 is connected to the acid cleaning system 200. A liquid outlet of the negative pressure tank44 is connected to an inlet of a waste liquid discharging pump 47 via a third solenoid valve 46. An outlet of the waste liquid discharging pump 47 is connected to an inlet of a waste liquid bottle. An air outlet of the negative pressure tank44 is connected to an inlet of the negative pressure pump 43. A second check valve20 is set between the air outlet of the negative pressure tank 44 and the inlet of negative pressure pump 43. An outlet of the waste liquid discharging pump 47 is merged with a fourth branch A0. A third check valve 46 is set upstream from a position where the waste liquid discharging pump 47 is merged with the fourth branch A0, so that when a flow in the waste liquid discharging pump 47 is overly large, the third check valve 46 is capable of preventing the waste liquid from flowing back.

Working processes of respective sections of the fluid system are described respectively below.

### 1. Dispersing the sample and the reagent

During dispersing of the sample, the first solenoid valve 22 is closed, and sample needle dispensing pump is driven by a motor to suck and disperse the sample by means of the sample needle 301.

During dispersing of the reagent, the second solenoid valve 28 is closed, and the reagent needle dispensing pump is driven by a motor to suck and disperse the reagent by means of the reagent needle 27. It is understandable that if it is required to disperse the general-purpose liquid, one of the reagent dispersing units disperses the general-purpose liquid. Likewise, the second solenoid valve 28 is closed, a general-purpose liquid needle dispensing pump is driven by a motor to suck and disperse the general-purpose liquid by means of a general-purpose liquid needle.

### 2. Rinsing the sample needle and rinsing the reagent needle

When a water level in a clean water tank 31 reaches a first water level, a water inlet valve 34 is opened, and a water inlet pump 33 is turned on to take in water; and when the water level in the clean water tank 31 rises to a second water level, the water inlet pump 33 is turned off to stop taking in water, and the water inlet valve 34 is closed. When the water level in the clean water tank 31 rises to a third water level, a water level alarm is given, and it is required to check by a human. During internal rinsing of the sample needle, the first solenoid valve 22 is opened, and the sample needle internal rinsing water pump 25 is turned on; the high-pressure water passes through the sample needle dispensing pump 23 and flows out of the inner space of the sample needle 301 so as to rinse the inner wall of the sample needle 301; and water following out of the sample needle 301 passes through the sample needle cleaning tank 36 and further rinses the outer wall of the sample needle 301. During internal rinsing of the reagent needle 27, the second solenoid valve 28 is opened, and the reagent needle internal rinsing water pump 29 is turned on, and the high-pressure water passes through the reagent needle dispensing pump 26 and flows out of the inner space of the reagent needle 27 so as to rinse the inner wall of the reagent needle 27; and water flowing out of the reagent needle 27 passes through the reagent needle cleaning tank 35 and further rinses the outer wall of the reagent needle 27.

During external rinsing of the sample needle 301, the sample needle external rinsing water pump 21 is started, and the high-pressure water flows into the sample needle cleaning tank 36. The sample needle 301 sucks and discharges the water repeatedly in the sample needle cleaning tank 36, so as to clean the inner wall and the outer wall of the sample needle 301thoroughly.

### 3. Performing acid cleaning to the sample needle and performing acid cleaning to the reagent needle

When a liquid level of an acid cleaning liquid in the acid cleaning liquid bottle is lower than a liquid level of a second liquid level sensor 40, the second liquid level sensor 40 will give an alarm to remind that it is required to add the acid cleaning liquid; and after the acid cleaning liquid is added, the alarm about the liquid level is canceled automatically. When the sample needle 301 is pickled, the corresponding acid cleaning liquid pump 37 is turned on. The cleaning liquid passes through the acid cleaning liquid pump 37 and flows into the sample needle cleaning tank 36, and the sample needle 301 sucks and discharges the cleaning liquid repeatedly for 10 times in the sample needle cleaning tank 36, so as to achieve the purpose of pickling the sample needle 301.When the reagent needle is pickled, the corresponding acid cleaning liquid pump 37 is turned on. The cleaning liquid passes through the acid cleaning liquid pump 37 and flows into the reagent needle cleaning tank 35, and the reagent needle sucks and discharges the cleaning liquid repeatedly for 10 times in reagent needle cleaning tank 35, so as to achieve the purpose of pickling the reagent needle 27.

### 4. Discharging the waste liquid

When an air pressure in the negative pressure tank 44 is higher than -1.5 kg/m², the negative pressure pump 43 is turned on. Air flows out through a silencer 41, and when the air pressure in the negative pressure tank 44 is lower than -2.5 kg/m², the negative pressure pump 43 is turned off. When a liquid level of the waste liquid is higher than an alarm liquid level of a third liquid level sensor 45, the waste liquid discharging pump 47 is turned on, and the third solenoid valve 46 is opened so as to start to discharge the waste liquid. When the liquid level of the waste liquid is lower than the alarm liquid level, the third solenoid valve 46 is closed, and the waste liquid discharging pump 47 is turned off. The third solenoid valve 46 is opened 0.2 S later after water rinsing is performed in the reagent needle cleaning tank 35 and the sample needle cleaning tank 36, and discharging of waste water produced by rinsing starts; and after the rinsing is finished, the third solenoid valve 46 is closed. The third solenoid valve 46 is opened 0.2 S later after acid cleaning is performed in the reagent needle cleaning tank 35 and the sample needle cleaning tank 36, and discharging of cleaning liquid waste water produced by acid cleaning starts; and after the acid cleaning is finished, the third solenoid valve 46 is closed.

By disposing a dispensing and rinsing system, an acid cleaning system and a waste discharging system, the fluid system of the present disclosure realizes multiple functions, such as storage of a sample liquid, sample loading, and collection of a waste liquid, and has high degree of automation; and moreover the fluid system has functions of real-time monitoring and automatic protection, so that safety and reliability of the system can be improved.

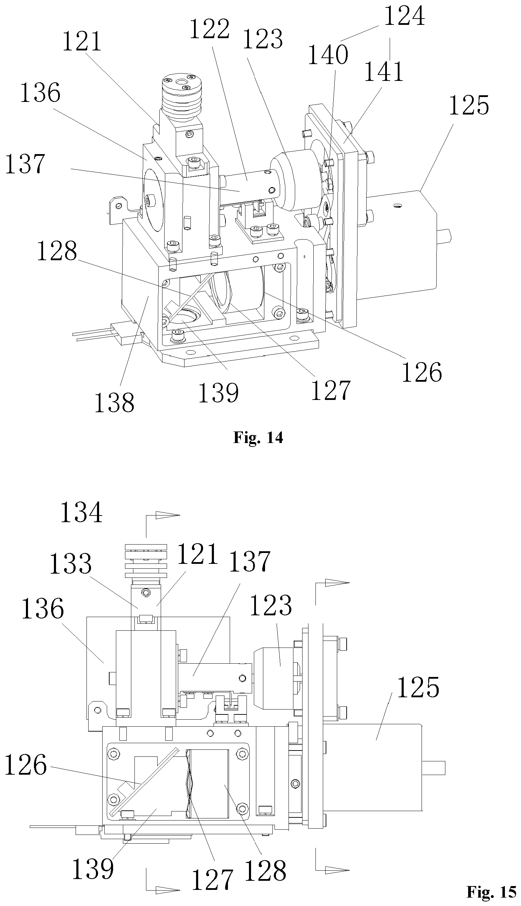

In an embodiment, the detection module includes a light path detection system 12 and a control system 10. As shown in Fig. 14, the light path detection system 12 includes an excitation unit 121, an excitation light pathway switch 122, a signal light pathway switch124 and a detection member 125. The excitation light pathway switch 122 is used to control conduction or blocking of an excitation light emitted by the excitation unit 121. The excitation light pathway switch 122 is connected to the signal light pathway switch 124 via a second actuating part 123. The second actuating part 123 controls the excitation light pathway switch 122 and the signal light pathway switch 124 to move synchronously in opposite directions, and is capable of controlling opening and closing of the excitation light pathway and the signal light pathway at the same time. When the excitation light pathway is opened, the signal light pathway is closed; and when the excitation light pathway is closed, the signal light pathway is opened.

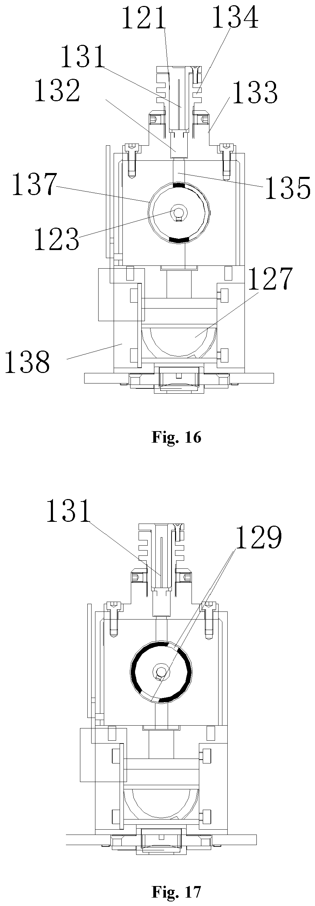

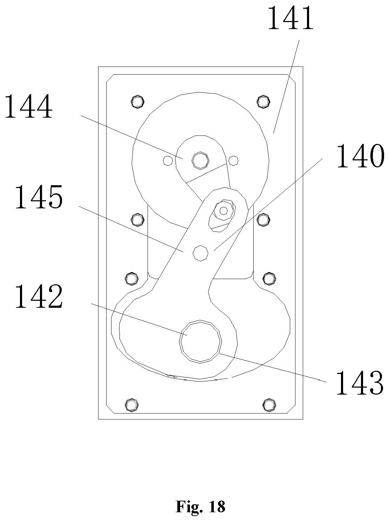

When it is required to excite a substance to be detected by the excitation light, the second actuating part 123 rotates and actuates the excitation light pathway switch 122 to rotate, so that the excitation light pathway is opened (as shown in Fig. 15); and meanwhile the second actuating part 123 actuates the signal light pathway switch 124 to rotate, so that the signal light pathway switch 124 in a closed state (as shown in Fig. 17). Likewise, when it is required to receive and detect luminescence signals generated by the substance to be detected, the second actuating part 123 rotates again and actuates the excitation light pathway switch 122 to rotate, so that the excitation light pathway switch 122 blocks the excitation light (as shown in Fig. 16); and meanwhile the second actuating part 123 actuates the signal light pathway switch 124 to rotate, so that the signal light pathway switch 124 is in an opened state (as shown in Fig. 18). The second actuating part 123 controls opening and closing of the excitation light pathway and the signal light pathway at the same time. When the excitation light pathway is opened, the signal light pathway is closed; and when the excitation light pathway is closed, the signal light pathway is opened.

In an embodiment, output shafts are respectively provided at two ends of the second actuating part 123.

In a preferred embodiment, the second actuating part 123 is a rotating electromagnet.

In an embodiment, as shown in Fig. 14, Fig. 15 and Fig. 16, the excitation light pathway switch 122 includes a second rotating part 137. Through holes 129 are provided at a circumferential side wall of a first end of the second rotating part 137, which through holes are used to realize conduction of the excitation light, and a second end of the second rotating part 137 is fastened to output shaft of a first end of the second actuating part 123. When it is required to control the excitation light to excite the substance to be detected, the second actuating part 123 actuates the second rotating part 137 to rotate, and the excitation light pathway switch 122 opens the excitation light pathway, so that the excitation light goes through the through holes 129 (as shown in Fig. 16). When it is required to control the excitation light to be blocked, the second actuating part 123 actuates the second rotating part 137 to rotate again, so that the excitation light pathway switch 122 is capable of preventing the excitation light from going through the through holes 129 (as shown in Fig. 17).

In a preferred embodiment, there are two through holes 129, and the two through holes 129 at the circumferential side wall of the first end of the second rotating part 137 are opposite to each other.

Preferably, the second rotating part 137 is in a shape of a tube.

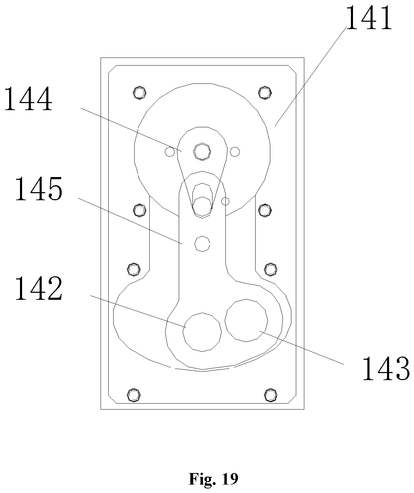

In a preferred embodiment, the excitation unit 121 includes a first housing base 136. The first end of the second rotating part 137 extends through one side wall of the first housing base 136 into the interior of the first housing base 136. The two through holes 129 are set inside the first housing base 136. The circumferential side wall of the second rotating part 137 is rotatably connected to one side wall of the first housing base 136. The top and the bottom of the first housing base 136 are both provided with an excitation light channel 135. When it is required to control the excitation light to excite the substance to be detected, the second actuating part 123 rotates, and the output shaft of a first end of the second actuating part 123 actuates the second rotating part 137 to rotate, so that the two through holes 129 are aligned with the two excitation light channels 135 (as shown in Fig. 16). The excitation light emitted by the excitation unit 121 goes through the two excitation light channels 135 to excite the substance to be detected. At this time, the signal light pathway switch 124 is in the closed state (as shown in Fig. 19).

In a preferred embodiment, the light path detection system 12 further includes a light path component, and the light path component is set below the excitation unit 121.

In an embodiment, as shown in Fig. 14 and Fig. 15, a transflective lens 128, which transmits the excitation light and reflects the luminescence signals generated by the substance to be detected after the excitation with the excitation light, is set at the side of the second rotating part 137 and away from the excitation unit 121. The transflective lens 128 is capable of not only transmitting the excitation light having a target wavelength and blocking the excitation light not having a target wavelength but also reflecting the luminescence signals having a target wavelength generated by the substance to be detected.

A first lens 127, which focuses the luminescence signals generated by the substance to be detected, is set at the side of the transflective lens 128, and the first lens 127 is close to the signal light pathway switch 124. The luminescence signals generated by the substance to be detected that is reflected by the transflective lens 128 is capable of passing through the first lens 127 and enters the detection member 125.

In a preferred embodiment, an optical filter 126 is provided at the side of the first lens 127 close to the signal light pathway switch 124. The luminescence signals generated by the substance to be detected, after being reflected by the transflective lens 128, pass through the first lens 127 and the optical filter 126 sequentially and enter the detection member 125. The optical filter 126 is capable of extracting signals having a desired wavelength in the luminescence signals generated by the substance to be detected and blocks stray light signals having a wavelength other than the desired wavelength.

In a preferred embodiment, as shown in Fig. 14 and Fig. 15, the transflective lens 128, the first lens 127 and the optical filter 126 are all set inside a second housing base 138. The top of the second housing base 138 is fastened to the bottom of the first housing base 136. A first opening is provided on one side wall of the second housing base 138, which first opening transmits the luminescence signals generated by the substance to be detected and leads to the signal light pathway switch 124. A second opening 139 is provided at the bottom of the second housing base138, which second opening is set to match the substance to be detected.

In an embodiment, as shown in Fig. 16, the excitation unit 121 includes a laser 131 to emit the excitation light. The excitation light emitted by the laser 131 excites, multiple times, the substance to be detected, such that the substance to be detected generates a plurality of luminescence signals.

In a preferred embodiment, as shown in Fig. 14 and Fig. 15, a second lens 132 to focus the excitation light is set at a position between the laser 131 and the second rotating part 137.

In a preferred embodiment, the laser 131 is set on a laser holder 134. The second lens 132 is set on a second lens holder 133. A top of the second lens holder 133 is fastened to the bottom of the laser holder 134, and the bottom of the second lens holder 133 is fastened to the top of the first housing base 136.

In the above embodiment, as shown in Fig. 14 and Fig. 15, the signal light pathway switch 124 includes a baffle 141 and a crank linkage device 140. The baffle 141 is fastened to the detection member 125, and a third opening 142, which corresponds to the first opening, is provided on the baffle 141. The crank linkage device140 is set at one side of the baffle 141 close to the first opening.

In the above embodiment, as shown in Fig. 18 and Fig. 19, the crank linkage device 140 includes a first rotating component 144, which is fastened to output shaft of the second end of the second actuating part 123, and a second rotating component 145. A fourth opening 143 is set on the second rotating component145. The first rotating component 144 and the second rotating component 145 are both rotatably connected to the baffle 141. When the output shaft of the second end of the second actuating part 123 actuates the first rotating component144to rotate anticlockwise around a rotation center thereof, the first rotating component 144 actuates the second rotating component 145 to rotate clockwise around a rotation center thereof, so that the fourth opening 143 is aligned with the third opening 142 (as shown in Fig. 18). In this way, the third opening 142 is in communication with the detection member 125, and the luminescence signals generated by the substance to be detected enter the detection member 125 for detection. At the same time, the output shaft of a first end of the second actuating part 123 actuates the second rotating part 137 to rotate anticlockwise so as to make the two through holes 129 and the two excitation light channels 135 staggered with each other (i.e., the two through holes 129 and the two excitation light channels 135 are not in communication with each other). At this time, the excitation light pathway switch 122 blocks the excitation light (as shown in Fig. 17), so as to ensure that a process of detecting the luminescence signals generated by the substance to be detected and a process of exciting the substance to be detected with the excitation light do not interfere with each other, thereby improving accuracy of detection information.

In an embodiment, when the excitation light is conducted to excite the substance to be detected (as shown in Fig. 16), the fourth opening 143 is staggered with the first opening and the third opening 142 (i.e., the fourth opening 143is not in communication with the first opening and the third opening 142), and at this time, the signal light pathway switch 124 is in the closed state (as shown in Fig. 19).

In the above embodiment, when the luminescence signals generated by the substance to be detected enter the detection member 125, the first opening and the third opening 142 are aligned with the fourth opening 143 (i.e., the fourth opening 143 is aligned with the first opening and the third opening 142), and the signal light pathway switch 124 is in the opened state (as shown in Fig. 18). At this time, the excitation light pathway switch 122 blocks the excitation light (as shown in Fig. 17).

In the above embodiment, the detection member 125 includes a detector, and the detector detects, multiple times, the luminescence signals generated by the substance to be detected and records corresponding results. The detector is a single photon counter, a photomultiplier tube or a silicon photocell.

In a preferred embodiment, the detector is the single photon counter.

In an embodiment, when the substance to be detected is a solution obtained after a chemiluminescence immunoreaction is performed, the excitation light emitted by the laser 131 in the excitation unit 121 may be used to excite, multiple times, the substance to be detected, so as to make the substance to be detected generate multiple chemiluminescence signals. The detection member 125 performs multiple times of collecting and obtains readings, converts the above chemiluminescence signals into digital signals for corresponding processing (a process of detecting the chemiluminescence signals by the detection member 125 includes collecting the chemiluminescence signals and obtaining the readings and then performing corresponding processing to the chemiluminescence signals), and records corresponding detection results, which can improve the detection efficiency and the accuracy of the detection information.

In a preferred embodiment, when the substance to be detected is the solution obtained after a chemiluminescence immunoreaction is performed, the excitation light emitted by the laser 131 in the excitation unit 121 is used to excite the substance to be detected twice, so as to generate two chemiluminescence signals, and the detector in the detection member 125 records the readings for the two chemiluminescence. After two readings are obtained, a processing unit processes the two readings. When an increasing range between the second reading and the first reading is larger than a maximum value of a standard curve, it can be determined that the immunoassay has a Hook risk. Based on the readings for the two chemiluminescence, an increasing range for a difference between the second reading and the first reading is indicated by A. Standard curves are respectively made based on first reading for a series of known standard substances containing a target antigen (or an antibody) and the increasing ranges A between two readings. The first reading for the substance to be detected containing the target antigen (or an antibody) and the increasing range A between two readings are compared with the standard curves, so that a concentration of the substance to be detected can be determined.

Light signals generated by exciting a sample detection liquid with the excitation light are transmitted to the detection member 125 via a light path member, and the detection member 125 converts the light signals into electric signals. The excitation light pathway switch and the signal light pathway switch of the present disclosure move synchronously in opposite directions, so as to ensure that a process of exciting a reactant in the reaction cuvette with the excitation light and a process of detecting chemiluminescence signals of the reactant do not interfere with each other, thereby improving accuracy of detection information for the chemiluminescence signals of the reactant and shortening a detection period. The present disclosure can also prevent problems of a time difference and hole-skipping detection in the detection process.

In an embodiment, the fully automatic light initiated chemiluminescence detector further includes an emergency position 2. The emergency position 2 is provided thereon with a corresponding sensing device. When an emergency sample is placed at the emergency position 2, the sensing device senses the emergency sample, and detection of the emergency sample will be performed first. At this time, the sampling arm module 3 temporarily stops sucking the sample from the test tube in the rail sample loading module 1, but sucks a sample liquid from the emergency sample and transfers the sample liquid to the liquid cuvette 160. After sucking of the emergency sample is finished, the sampling arm module 3 continues to suck the sample in an ordinary rail sample loading device.

In an embodiment, the fully automatic light initiated chemiluminescence detector further includes a sample diluent compartment 4. There are at least two kinds of sample diluents in the sample diluent compartment 4, and the sampling arm module 3 sucks the diluent to dilute the sample.

In an embodiment, the fully automatic light initiated chemiluminescence detector completes the detection through the following process. The rail sample loading module 1 pushes the sample to be detected to a sample sucking position. The cuvette sorting module 17 sorts the disordered reaction cuvettes 160 into ordered reaction cuvettes, and the cuvette delivering module 16 delivers the reaction cuvette 160to a cuvette feeding position of the first incubation disk 5. Then, the first incubation disk 5 rotates, and brings the reaction cuvette 160 from the cuvette feeding position to a sample adding position. Subsequently, the sampling arm module 3 is controlled by the fluid system to rotate so as to suck the sample from the test tube arriving at the sample sucking position in the rail sample loading module 1, and then the sampling arm module 3 rotates to the sample adding position of the first incubation disk 5 so as to add the sample into the reaction cuvette 160 at the sample adding position. If there is an emergency sample, the sampling arm module 3 will suck the emergency sample first, and continues previous sucking of the sample in the rail sample loading module 1 after sucking of the emergency sample is finished. After that, the sampling arm module 3 sucks the diluent to dilute the sample. Then, the first incubation disk 5 continues to rotate so as to rotate the reaction cuvette 160 at the sample addition position to a reagent position; and meanwhile the first reagent disk8 rotates so as to rotate the reagent thereon to a first reagent sucking position. The first reagent arm 6 is controlled by the fluid system to suck a certain amount of a first reagent from the reagent sucking position of the first reagent disk 8, rotates to the reagent position of the first incubation disk 5, and adds the first reagent into the reaction cuvette 160.

After that, the first incubation disk 5 continues to rotate so as to rotate the reaction cuvette 160 from the first reagent position to a second reagent position; and meanwhile, the first reagent disk 8 rotates so as to rotate the reagent to a second reagent sucking position. The second reagent arm 15is controlled by the fluid system 7 to suck a certain amount of a second reagent from the reagent sucking position of the first reagent disk 8, and rotates to the second reagent position of the first incubation disk 5 so as to add the second reagent into the reaction cuvette 160; and the first incubation disk 5 rotates the reaction cuvette 160 containing a mixed solution to a mixing position. Then, a mixing mechanism mixes the sample in the reaction cuvette 160 uniformly. After that, the reaction cuvette 160 is rotated and incubated in the first incubation disk 5 for a certain period. After incubation time is up, the reaction cuvette 160 is rotated to a reaction cuvette removing position of the first incubation disk 5 exactly. Meanwhile, the second incubation disk 13 rotates and rotates to a reaction cuvette removing position; and the cuvette removing and discarding module 14 is started, and the rail is switched to the cuvette discarding rail so as to discard the reaction cuvette 160 on the second incubation disk 13. Then, the rail is switched to the cuvette pushing rail for the cuvette removing and discarding module 14, so that the reaction cuvette 160 to be detected in the first incubation disk 5 is removed to the second incubation disk 13. The reaction cuvette 160 is rotated to a reagent adding position along with the second incubation disk 13; meanwhile, the second reagent disk 9 rotates, and rotates the reagent to a third reagent sucking position of the second reagent disk 9; and the third reagent arm 11 rotates and is controlled by the fluid system 7 to suck a third reagent from the reagent bottle, and then rotates to the reagent adding position of the second incubation disk so as to discharge the reagent into the reaction cuvette 160. After that, the reaction cuvette 160 is rotated with the second incubation disk 13. After incubation time is up, the reaction cuvette 160 is transferred to a light path detection system 12, and the light path detection system 12 performs optical detection to the sample in the reaction cuvette 160. The sample is excited by the excitation light emitted by the excitation unit to generate luminescence signals, and collecting the chemiluminescence signals and obtaining the readings are performed multiple times; the above chemiluminescence signals are converted into digital signals for corresponding processing (a process of detecting the chemiluminescence signals by the detection member 125 includes collecting the chemiluminescence signals and obtaining readings and then performing corresponding processing to the chemiluminescence signals), and then the processed digital signals are transmitted to the control system 10, so that the control system 10 performs detection analysis to received information.

After that, the reaction cuvette 160 is rotated along with the second incubation disk 13, and is rotated to a reagent reaction cuvette discarding and feeding position of the second incubation disk 13. Meanwhile, the cuvette removing and discarding module 14 is started and switches the rail to the cuvette discarding rail, so as to push out and discard a detected reaction cuvette 160. Now, the entire sample detection process is completed.

The entire process is operated automatically, so that problems, such as individual differences, manual errors, non-standard actions and other uncertainties, in the manual operation can be effectively avoided, and the accuracy of the chemiluminescence immunoassay can be improved.

Although the present disclosure has been described with reference to the preferred embodiments, various modifications can be made thereto, without departing from the scope of the claims.

## Claims

1. A fully automatic light initiated chemiluminescence detector, comprising a sample loading module (1), a sampling arm module (3), an incubation disk module, a reagent disk module, a reagent arm module and a detection module,
wherein a sample in the sample loading module is transferred to a reaction cuvette (160) by means of the sampling arm module (3); after the reaction cuvette (160) arrives at a specified position, the reagent arm module transfers a reagent in the reagent disk module to the reaction cuvette (160); the sample and the reagent in the reaction cuvette (160) are mixed to be incubated at the incubation disk by a mixing mechanism; and after the incubation, the detection module sends light on a substance to be detected in the reaction cuvette (160) to initiate a reaction between the sample and the reagent, and detects a luminescence signal generated after the initiation,
**characterized in that** the fully automatic light initiated chemiluminescence detector further comprises a cuvette sorting module (17) and a cuvette delivering module (16) located between the cuvette sorting module (17) and the incubation disk module, the cuvette sorting module (17) being configured to sort disordered reaction cuvettes into ordered reaction cuvettes, which are delivered to the incubation disk module in sequence via the cuvette delivering module (16), and
wherein the cuvette delivering module (16) comprises a slide rail (166), a cuvette holding device slidably connected to the slide rail (166), a transmission device for controlling a movement of the cuvette holding device along the slide rail (166), a slide channel (169) located below the cuvette holding device, and a reset device (1611) enabling the reset of the cuvette holding device, the cuvette holding device being configured to control a movement of the reaction cuvette (160), so that the cuvette (160) is delivered horizontally directly from the cuvette sorting module (17) through the slide channel (169) to the incubation disk module.

2. The fully automatic light initiated chemiluminescence detector according to claim 1, wherein the cuvette sorting module has a cuvette accommodation part (171) for placing the reaction cuvette (160), a cuvette off-loading device being set at the bottom of the cuvette accommodation part,
wherein the cuvette off-loading device comprises a reaction cuvette rotating disk (172), wherein a cuvette groove (170), which matches the reaction cuvette (160), is provided at a circumferential edge at a top of the reaction cuvette rotating disk (172).

3. The fully automatic light initiated chemiluminescence detector according to claim 2, wherein the cuvette off-loading device comprises a first actuating part (174) to actuate off-load of the reaction cuvette (160) from the cuvette groove (170), wherein the first actuating part (174) is set at a side of the reaction cuvette rotating disk (172) and comprises a toggle wheel (331) to actuate the off-load of the reaction cuvette (160) from the cuvette groove (170), wherein a first cuvette off-loading groove (181), which matches the reaction cuvette (160), is provided on the toggle wheel (331),
wherein the first cuvette off-loading groove (181) is configured to off-load the reaction cuvette (160) from the cuvette groove (170) in sequence during rotation of the reaction cuvette rotating disk (172).

4. The fully automatic light initiated chemiluminescence detector according to any one of claims 1 to 3, wherein the sample loading module comprises a baseplate, several test tube racks (103) and a moving device, wherein the test tube racks (103) and the moving device are set on the baseplate, and the test tube racks (103) are moved to specified positions by means of the moving device.

5. The fully automatic light initiated chemiluminescence detector according to claim 4, wherein the moving device comprises an X-axis pushing mechanism, wherein the X-axis pushing mechanism comprises a circulation pushing member (106), which actuates the operation of a synchronous belt by means of a motor,
wherein blocking pieces are provided with intervals on the synchronous belt along a direction of the synchronous belt, and the circulation pushing member (106) pushes the test tube racks (103) forward section by section by means of the synchronous belt having the blocking pieces.

6. The fully automatic light initiated chemiluminescence detector according to any one of claims 1 to 5, wherein the incubation disk module comprises a first incubation disk (5) and a second incubation disk (13), and both incubation disks rotate in a motor-driven manner, wherein a cuvette removing and discarding module (14) is provided between the first incubation disk (5) and the second incubation disk (13), the cuvette removing and discarding module (14) comprising a cuvette pushing rail and a cuvette discarding rail, and the cuvette pushing rail and the cuvette discarding rail are switched by means of a linear motor.

7. The fully automatic light initiated chemiluminescence detector according to any one of claims 1 to 6, wherein the detection module comprises a light path detection system (12) and a control system (10), wherein the light path detection system (12) comprises:
an excitation light pathway switch (122) to control conduction or blocking of an excitation light emitted by an excitation unit (121);
a signal light pathway switch (124) to control the entrance into a receiving and detecting unit of a luminescence signal generated by the sample after the initiation; and
a second actuating part (123), a first end of which is connected to the excitation light pathway switch (122), and a second end of which is connected to the signal light pathway switch (124),
wherein the second actuating part (123) actuates opening and closing of a excitation light pathway and a signal light pathway at the same time, wherein when the excitation light pathway is opened, the signal light pathway is closed, and when the excitation light pathway is closed, the signal light pathway is opened.

8. The fully automatic light initiated chemiluminescence detector according to claim 7, wherein the excitation light pathway switch (122) comprises a second rotating part (137), wherein through holes (129) are provided at a circumferential side wall of a first end of the second rotating part (137), which through holes (129) are used to realize conduction of the excitation light pathway, and a second end of the second rotating part (137) is fastened to an output shaft of a first end of the second actuating part (123).

9. The fully automatic light initiated chemiluminescence detector according to claim 8, wherein the light path detection system comprises an excitation unit (121), wherein the excitation unit (121) comprises a first housing base (136), wherein the first end of the second rotating part (137) extends through one side wall of the first housing base (136) into the interior of the first housing base (136); the through holes (129) are set inside the first housing base (136); the circumferential side wall of the second rotating part (137) is rotatably connected to one side wall of the first housing base (136); and a top and a bottom of the first housing base (136) are both provided with an excitation light channel (135).

10. The fully automatic light initiated chemiluminescence detector according to claim 9, wherein a transflective lens (128), which transmits the excitation light and reflects luminescence signals generated by the substance to be detected after the excitation with the excitation light, is set at the side of the second rotating part (123) and away from the excitation unit,
wherein a first lens (127), which focuses the luminescence signals generated by the substance to be detected, is set at the side of the transflective lens (128), and the first lens (127) is close to the signal light pathway switch (124),
wherein an optical filter (126) is provided at the side of the first lens (127) close to the signal light pathway switch (124), and
the transflective lens (128), the first lens (127) and the optical filter (126) are all set inside a second housing base (138), wherein a top of the second housing base (138) is fastened to the bottom of the first housing base (136); a first opening is provided on one side wall of the second housing base (138), which first opening transmits the luminescence signals generated by the substance to be detected and leads to the signal light pathway switch (124); and a second opening (139) is provided at a bottom of the second housing base (138), which second opening (139) is set to match the substance to be detected.

11. The fully automatic light initiated chemiluminescence detector according to any one of claims 8 to 10, wherein the signal light pathway switch (124) comprises:
a baffle (140), which is fastened to the receiving and detecting unit, and a third opening (142) corresponding to the first opening is provided on the baffle (140); and
a crank linkage device (141), which is set at a side of the baffle (140) close to the first opening.

12. The fully automatic light initiated chemiluminescence detector according to claim 11, wherein the crank linkage device (141) comprises:
a first rotating component (144), which is fastened to an output shaft of the second end of the second actuating part (123); and
a second rotating component (145), which is rotatably connected to the first rotating component (144), and a fourth opening (143) is provided on the second rotating component (145),
wherein the first rotating component (144) and the second rotating component (145) are both rotatably connected to the baffle (140).

13. The fully automatic light initiated chemiluminescence detector according to claim 12, wherein when the excitation light is conducted to excite the substance to be detected, the fourth opening (143) is staggered with the first opening and the third opening (142), and at this time, the signal light pathway switch (124) is in a closed state.

14. The fully automatic light initiated chemiluminescence detector according to claim 13, wherein when the luminescence signals generated by the substance to be detected enter the receiving and detecting unit, the first opening and the third opening (142) are aligned with the fourth opening, and the signal light pathway switch (124) is in an opened state; and at this time, the excitation light pathway switch (122) blocks the excitation light.

## Patentansprüche

1. Vollautomatischer lichtinitiierter Chemilumineszenzdetektor, umfassend ein Probenlademodul (1), ein Probenarmmodul (3), ein Inkubationsscheibenmodul, ein Reagenzscheibenmodul, ein Reagenzarmmodul und ein Detektionsmodul,
wobei eine Probe in dem Probenlademodul mittels des Probenarmmoduls (3) zu einer Reaktionsküvette (160) übertragen wird; nachdem die Reaktionsküvette (160) an einer bestimmten Position angekommen ist, das Reagenzarmmodul ein Reagenz in dem Reagenzscheibenmodul zu der Reaktionsküvette (160) überträgt; die Probe und das Reagenz in der Reaktionsküvette (160) gemischt werden, um an der Inkubationsscheibe durch einen Mischmechanismus inkubiert zu werden; und nach der Inkubation das Detektionsmodul Licht auf eine zu detektierende Substanz in der Reaktionsküvette (160) sendet, um eine Reaktion zwischen der Probe und dem Reagenz zu initiieren, und ein nach der Initiierung erzeugtes Lumineszenzsignal detektiert,
**dadurch gekennzeichnet, dass** der vollautomatische lichtinitiierte Chemilumineszenzdetektor ferner ein Küvettensortiermodul (17) und ein Küvettenzuführmodul (16) umfasst, das zwischen dem Küvettensortiermodul (17) und dem Inkubationsscheibenmodul angeordnet ist, wobei das Küvettensortiermodul (17) dazu konfiguriert ist, ungeordnete Reaktionsküvetten in geordnete Reaktionsküvetten zu sortieren, die nacheinander über das Küvettenzuführmodul (16) an das Inkubationsscheibenmodul geliefert werden, und
wobei das Küvettenzuführmodul (16) eine Gleitschiene (166) umfasst, eine mit der Gleitschiene (166) gleitend verbundene Küvettenhaltevorrichtung, eine Übertragungsvorrichtung zum Steuern einer Bewegung der Küvettenhaltevorrichtung entlang der Gleitschiene (166), einen unterhalb der Küvettenhaltevorrichtung angeordneten Gleitkanal (169) und eine Rückstellvorrichtung (1611), die die Rückstellung der Küvettenhaltevorrichtung ermöglicht, wobei die Küvettenhaltevorrichtung dazu konfiguriert ist, eine Bewegung der Reaktionsküvette (160) zu steuern, so dass die Küvette (160) horizontal direkt von dem Küvettensortiermodul (17) durch den Gleitkanal (169) zu dem Inkubationsscheibenmodul geliefert wird.

2. Vollautomatischer lichtinitiierter Chemilumineszenzdetektor nach Anspruch 1, wobei das Küvettensortiermodul einen Küvettenaufnahmeteil (171) zur Aufnahme der Reaktionsküvette (160) aufweist, wobei eine Küvettenentladevorrichtung am Boden des Küvettenaufnahmeteils angeordnet ist,
wobei die Küvettenentladevorrichtung eine Reaktionsküvettendrehscheibe (172) umfasst, wobei eine Küvettennut (170), die zur Reaktionsküvette (160) passt, an einem Umfangsrand an einer Oberseite der Reaktionsküvettendrehscheibe (172) vorgesehen ist.

3. Vollautomatischer lichtinitiierter Chemilumineszenzdetektor nach Anspruch 2, wobei die Küvettenentladevorrichtung einen ersten Betätigungsteil (174) umfasst, um das Entladen der Reaktionsküvette (160) aus der Küvettennut (170) zu betätigen, wobei der erste Betätigungsteil (174) auf einer Seite der Reaktionsküvettendrehscheibe (172) angeordnet ist und ein Schaltrad (331) zur Betätigung der Entladung der Reaktionsküvette (160) aus der Küvettennut (170) umfasst, wobei eine erste Küvettenentladungsnut (181), die zur Reaktionsküvette (160) passt, am Schaltrad (331) vorgesehen ist,
wobei die erste Küvettenentladungsnut (181) dazu konfiguriert ist, die Reaktionsküvetten (160) während der Drehung der Reaktionsküvettendrehscheibe (172) nacheinander aus der Küvettennut (170) zu entladen.

4. Vollautomatischer lichtinitiierter Chemilumineszenzdetektor nach einem der Ansprüche 1 bis 3, wobei das Probenlademodul eine Grundplatte, mehrere Reagenzglasgestelle (103) und eine Bewegungsvorrichtung umfasst, wobei die Reagenzglasgestelle (103) und die Bewegungsvorrichtung auf der Grundplatte angeordnet sind und die Reagenzglasgestelle (103) mittels der Bewegungsvorrichtung in bestimmte Positionen bewegt werden.

5. Vollautomatischer lichtinitiierter Chemilumineszenzdetektor nach Anspruch 4, wobei die Bewegungsvorrichtung einen X-Achsen-Schubmechanismus umfasst, wobei der X-Achsen-Schubmechanismus ein Umlaufschubelement (106) umfasst, das den Betrieb eines Synchronriemens mittels eines Motors antreibt,
wobei Blockierstücke in Abständen auf dem Synchronriemen entlang einer Richtung des Synchronriemens vorgesehen sind, und das Umlaufschubelement (106) die Reagenzglasgestelle (103) mittels des Synchronriemens mit den Blockierstücken abschnittsweise vorwärts schiebt.

6. Vollautomatischer lichtinitiierter Chemilumineszenzdetektor nach einem der Ansprüche 1 bis 5, wobei das Inkubationsscheibenmodul eine erste Inkubationsscheibe (5) und eine zweite Inkubationsscheibe (13) umfasst und beide Inkubationsscheiben motorisch angetrieben rotieren, wobei zwischen der ersten Inkubationsscheibe (5) und der zweiten Inkubationsscheibe (13) ein Küvettenentnahme- und -abgabemodul (14) vorgesehen ist, wobei das Küvettenentnahme- und -abgabemodul (14) eine Küvettenschubschiene und eine Küvettenabgabeschiene aufweist und die Küvettenschubschiene und die Küvettenabgabeschiene mittels eines Linearmotors geschaltet werden.

7. Vollautomatischer lichtinitiierter Chemilumineszenzdetektor nach einem der Ansprüche 1 bis 6, wobei das Detektionsmodul ein Lichtpfaddetektionssystem (12) und ein Steuerungssystem (10) umfasst, wobei das Lichtpfaddetektionssystem (12) umfasst:
einen Anregungslichtpfadschalter (122), um die Leitung oder Blockierung eines von einer Anregungseinheit (121) emittierten Anregungslichts zu steuern;
einen Signallichtpfadschalter (124), um den Eintritt eines von der Probe nach der Initiierung erzeugten Lumineszenzsignals in eine Empfangs- und Detektionseinheit zu steuern; und
einen zweiten Betätigungsteil (123), dessen erstes Ende mit dem Anregungslichtpfadschalter (122) verbunden ist und dessen zweites Ende mit dem Signallichtpfadschalter (124) verbunden ist,
wobei der zweite Betätigungsteil (123) das Öffnen und Schließen eines Anregungslichtpfades und eines Signallichtpfades zur gleichen Zeit betätigt, wobei, wenn der Anregungslichtpfad geöffnet ist, der Signallichtpfad geschlossen ist, und wenn der Anregungslichtpfad geschlossen ist, der Signallichtpfad geöffnet ist.

8. Vollautomatischer lichtinitiierter Chemilumineszenzdetektor nach Anspruch 7, wobei der Anregungslichtpfadschalter (122) einen zweiten rotierenden Teil (137) umfasst, wobei Durchgangslöcher (129) an einer Umfangsseitenwand eines ersten Endes des zweiten rotierenden Teils (137) vorgesehen sind, wobei die Durchgangslöcher (129) verwendet werden, um die Leitung des Anregungslichtpfades zu realisieren, und ein zweites Ende des zweiten rotierenden Teils (137) an einer Ausgangswelle eines ersten Endes des zweiten Betätigungsteils (123) befestigt ist.

9. Vollautomatischer lichtinitiierter Chemilumineszenzdetektor nach Anspruch 8, wobei das Lichtpfaddetektionssystem eine Anregungseinheit (121) umfasst, wobei die Anregungseinheit (121) eine erste Gehäusebasis (136) umfasst, wobei das erste Ende des zweiten rotierenden Teils (137) sich durch eine Seitenwand der ersten Gehäusebasis (136) in das Innere der ersten Gehäusebasis (136) erstreckt; die Durchgangslöcher (129) im Inneren der ersten Gehäusebasis (136) angeordnet sind; die Umfangsseitenwand des zweiten rotierenden Teils (137) drehbar mit einer Seitenwand der ersten Gehäusebasis (136) verbunden ist; und eine Oberseite und eine Unterseite der ersten Gehäusebasis (136) beide mit einem Anregungslichtkanal (135) versehen sind.

10. Vollautomatischer lichtinitiierter Chemilumineszenzdetektor nach Anspruch 9, wobei eine transflektive Linse (128), die das Anregungslicht durchlässt und Lumineszenzsignale reflektiert, die von der zu detektierenden Substanz nach der Anregung mit dem Anregungslicht erzeugt werden, an der Seite des zweiten rotierenden Teils (123) und entfernt von der Anregungseinheit angeordnet ist,
wobei eine erste Linse (127), die die von der zu detektierenden Substanz erzeugten Lumineszenzsignale fokussiert, an der Seite der transflektiven Linse (128) angeordnet ist, und die erste Linse (127) sich in der Nähe des Signallichtpfadschalters (124) befindet,
wobei ein optischer Filter (126) an der Seite der ersten Linse (127) in der Nähe des Signallichtpfadschalters (124) vorgesehen ist, und
die transflektive Linse (128), die erste Linse (127) und der optische Filter (126) alle innerhalb einer zweiten Gehäusebasis (138) angeordnet sind, wobei eine Oberseite der zweiten Gehäusebasis (138) an der Unterseite der ersten Gehäusebasis (136) befestigt ist; eine erste Öffnung an einer Seitenwand der zweiten Gehäusebasis (138) vorgesehen ist, wobei die erste Öffnung die von der zu detektierenden Substanz erzeugten Lumineszenzsignale überträgt und zu dem Signallichtpfadschalter (124) führt; und eine zweite Öffnung (139) an einem Boden der zweiten Gehäusebasis (138) vorgesehen ist, wobei die zweite Öffnung (139) auf die zu detektierende Substanz abgestimmt ist.

11. Vollautomatischer lichtinitiierter Chemilumineszenzdetektor nach einem der Ansprüche 8 bis 10, wobei der Signallichtpfadschalter (124) umfasst:
eine Scheibe (140), die an der Empfangs- und Detektionseinheit befestigt ist, und eine dritte Öffnung (142), die der ersten Öffnung entspricht und an der Scheibe (140) vorgesehen ist; und
eine Kurbelgestängevorrichtung (141), die an einer Seite der Scheibe (140) in der Nähe der ersten Öffnung angebracht ist.

12. Vollautomatischer lichtinitiierter Chemilumineszenzdetektor nach Anspruch 11, wobei die Kurbelgestängevorrichtung (141) umfasst:
eine erste rotierende Komponente (144), die an einer Ausgangswelle des zweiten Endes des zweiten Betätigungsteils (123) befestigt ist; und
eine zweite rotierende Komponente (145), die drehbar mit der ersten rotierenden Komponente (144) verbunden ist, und eine vierte Öffnung (143), die an der zweiten rotierenden Komponente (145) vorgesehen ist,
wobei die erste rotierende Komponente (144) und die zweite rotierende Komponente (145) beide drehbar mit der Scheibe (140) verbunden sind.

13. Vollautomatischer lichtinitiierter Chemilumineszenzdetektor nach Anspruch 12, wobei, wenn das Anregungslicht zur Anregung der zu detektierenden Substanz geleitet wird, die vierte Öffnung (143) zu der ersten Öffnung und der dritten Öffnung (142) versetzt ist, und zu diesem Zeitpunkt der Signallichtpfadschalter (124) in einem geschlossenen Zustand ist.

14. Vollautomatischer lichtinitiierter Chemilumineszenzdetektor nach Anspruch 13, wobei, wenn die von der zu detektierenden Substanz erzeugten Lumineszenzsignale in die Empfangs- und Detektionseinheit eintreten, die erste Öffnung und die dritte Öffnung (142) zu der vierten Öffnung ausgerichtet sind und der Signallichtpfadschalter (124) sich in einem geöffneten Zustand befindet; und zu diesem Zeitpunkt der Anregungslichtpfadschalter (122) das Anregungslicht blockiert.

## Revendications

1. - Détecteur de chimiluminescence entièrement automatique, déclenché par la lumière, comprenant un module de chargement d'échantillon (1), un module de bras d'échantillonnage (3), un module de disque d'incubation, un module de disque de réactif, un module de bras de réactif et un module de détection,
dans lequel un échantillon dans le module de chargement d'échantillon est transféré à une cuvette de réaction (160) au moyen du module de bras d'échantillonnage (3) ; après que la cuvette de réaction (160) arrive à une position spécifiée, le module de bras de réactif transfère un réactif dans le module de disque de réactif à la cuvette de réaction (160) ; l'échantillon et le réactif dans la cuvette de réaction (160) sont mélangés pour être incubés au disque d'incubation par un mécanisme de mélange ; et après l'incubation, le module de détection envoie de la lumière sur une substance à détecter dans la cuvette de réaction (160) pour déclencher une réaction entre l'échantillon et le réactif, et détecte un signal de luminescence généré après le déclenchement,
**caractérisé par le fait que** le détecteur de chimiluminescence entièrement automatique, déclenché par la lumière, comprend en outre un module de tri de cuvettes (17) et un module de distribution de cuvettes (16) situé entre le module de tri de cuvettes (17) et le module de disque d'incubation, le module de tri de cuvettes (17) étant configuré pour trier des cuvettes de réaction désordonnées en cuvettes de réaction ordonnées, qui sont distribuées au module de disque d'incubation dans l'ordre par l'intermédiaire du module de distribution de cuvettes (16), et
dans lequel le module de distribution de cuvettes (16) comprend un rail de coulissement (166), un dispositif de maintien de cuvette relié de manière coulissante au rail de coulissement (166), un dispositif de transmission pour commander un mouvement du dispositif de maintien de cuvette le long du rail de coulissement (166), un canal de coulissement (169) situé sous le dispositif de maintien de cuvette, et un dispositif de réinitialisation (1611) permettant la réinitialisation du dispositif de maintien de cuvette, le dispositif de maintien de cuvette étant configuré pour commander un mouvement de la cuvette de réaction (160), de telle sorte que la cuvette (160) est distribuée horizontalement directement du module de tri de cuvettes (17) au module de disque d'incubation en passant par le canal de coulissement (169).

2. - Détecteur de chimiluminescence entièrement automatique, déclenché par la lumière, selon la revendication 1, dans lequel le module de tri de cuvettes a une partie de logement de cuvette (171) pour placer la cuvette de réaction (160), un dispositif de déchargement de cuvette étant placé à la partie inférieure de la partie de logement de cuvette,
dans lequel le dispositif de déchargement de cuvette comprend un disque rotatif de cuvette de réaction (172), dans lequel une rainure de cuvette (170), qui correspond à la cuvette de réaction (160), est disposée à un bord périphérique à une partie supérieure du disque rotatif de cuvette de réaction (172).

3. - Détecteur de chimiluminescence entièrement automatique, déclenché par la lumière, selon la revendication 2, dans lequel le dispositif de déchargement de cuvette comprend une première partie d'actionnement (174) pour actionner un déchargement de la cuvette de réaction (160) à partir de la rainure de cuvette (170), dans lequel la première partie d'actionnement (174) est placée à un côté du disque rotatif de cuvette de réaction (172) et comprend une roue à bascule (331) pour actionner le déchargement de la cuvette de réaction (160) à partir de la rainure de cuvette (170), dans lequel une première rainure de déchargement de cuvette (181), qui correspond à la cuvette de réaction (160), est disposée sur la roue à bascule (331),
dans lequel la première rainure de déchargement de cuvette (181) est configurée pour décharger la cuvette de réaction (160) à partir de la rainure de cuvette (170) dans l'ordre pendant la rotation du disque rotatif de cuvette de réaction (172).

4. - Détecteur de chimiluminescence entièrement automatique, déclenché par la lumière, selon l'une quelconque des revendications 1 à 3, dans lequel le module de chargement d'échantillon comprend une plaque de base, plusieurs supports de tubes à essai (103) et un dispositif de déplacement, dans lequel les supports de tubes à essai (103) et le dispositif de déplacement sont placés sur la plaque de base, et les supports de tubes à essai (103) sont déplacés à des positions spécifiées au moyen du dispositif de déplacement.

5. - Détecteur de chimiluminescence entièrement automatique, déclenché par la lumière, selon la revendication 4, dans lequel le dispositif de déplacement comprend un mécanisme de poussée selon l'axe X, dans lequel le mécanisme de poussée selon l'axe X comprend un élément de poussée de circulation (106), qui actionne le fonctionnement d'une courroie synchrone au moyen d'un moteur,
dans lequel des pièces de blocage sont disposées à intervalles sur la courroie synchrone le long d'une direction de la courroie synchrone, et l'élément de poussée de circulation (106) pousse les supports de tubes à essai (103) vers l'avant section par section au moyen de la courroie synchrone ayant les pièces de blocage.

6. - Détecteur de chimiluminescence entièrement automatique, déclenché par la lumière, selon l'une quelconque des revendications 1 à 5, dans lequel le module de disque d'incubation comprend un premier disque d'incubation (5) et un second disque d'incubation (13), et les deux disques d'incubation tournent d'une manière motorisée, dans lequel un module de retrait et de mise au rebut de cuvette (14) est disposé entre le premier disque d'incubation (5) et le second disque d'incubation (13), le module de retrait et de mise au rebut de cuvette (14) comprenant un rail de poussée de cuvette et un rail de mise au rebut de cuvette, et le rail de poussée de cuvette et le rail de mise au rebut de cuvette sont commutés au moyen d'un moteur linéaire.

7. - Détecteur de chimiluminescence entièrement automatique, déclenché par la lumière, selon l'une quelconque des revendications 1 à 6, dans lequel le module de détection comprend un système de détection de trajet lumineux (12) et un système de commande (10), dans lequel le système de détection de trajet lumineux (12) comprend :
- un commutateur de trajet de lumière d'excitation (122) pour commander la conduction ou le blocage d'une lumière d'excitation émise par une unité d'excitation (121) ;
- un commutateur de trajet de lumière de signalisation (124) pour commander l'entrée dans une unité de réception et de détection d'un signal de luminescence généré par l'échantillon après le déclenchement ; et
- une seconde partie d'actionnement (123), dont une première extrémité est reliée au commutateur de trajet de lumière d'excitation (122) et une seconde extrémité est reliée au commutateur de trajet de lumière de signalisation (124),
dans lequel la seconde partie d'actionnement (123) actionne l'ouverture et la fermeture d'un trajet de lumière d'excitation et d'un trajet de lumière de signalisation en même temps, dans lequel, lorsque le trajet de lumière d'excitation est ouvert, le trajet de lumière de signalisation est fermé, et lorsque le trajet de lumière d'excitation est fermé, le trajet de lumière de signalisation est ouvert.

8. - Détecteur de chimiluminescence entièrement automatique, déclenché par la lumière, selon la revendication 7, dans lequel le commutateur de trajet de lumière d'excitation (122) comprend une seconde partie rotative (137), dans lequel des trous traversants (129) sont disposés à une paroi latérale périphérique d'une première extrémité de la seconde partie rotative (137), lesquels trous traversants (129) sont utilisés pour réaliser la conduction du trajet de lumière d'excitation, et une seconde extrémité de la seconde partie rotative (137) est fixée à un arbre de sortie d'une première extrémité de la seconde partie d'actionnement (123).

9. - Détecteur de chimiluminescence entièrement automatique, déclenché par la lumière, selon la revendication 8, dans lequel le système de détection de trajet lumineux comprend une unité d'excitation (121), dans lequel l'unité d'excitation (121) comprend une première base de boîtier (136), dans lequel la première extrémité de la seconde partie rotative (137) s'étend à travers une paroi latérale de la première base de boîtier (136) dans l'intérieur de la première base de boîtier (136) ; les trous traversants (129) sont placés à l'intérieur de la première base de boîtier (136) ; la paroi latérale périphérique de la seconde partie rotative (137) est reliée de manière rotative à une paroi latérale de la première base de boîtier (136) ; et une partie supérieure et une partie inférieure de la première base de boîtier (136) comportent toutes deux un canal de lumière d'excitation (135).

10. - Détecteur de chimiluminescence entièrement automatique, déclenché par la lumière, selon la revendication 9, dans lequel une lentille transflective (128), qui transmet la lumière d'excitation et reflète des signaux de luminescence générés par la substance à détecter après l'excitation par la lumière d'excitation, est placée sur le côté de la seconde partie rotative (123) et loin de l'unité d'excitation, dans lequel une première lentille (127), qui concentre les signaux de luminescence générés par la substance à détecter, est placée sur le côté de la lentille transflective (128), et la première lentille (127) est à proximité du commutateur de trajet de lumière de signalisation (124),
dans lequel un filtre optique (126) est disposé sur le côté de la première lentille (127) à proximité du commutateur de trajet de lumière de signalisation (124), et
la lentille transflective (128), la première lentille (127) et le filtre optique (126) sont tous placés à l'intérieur d'une seconde base de boîtier (138), une partie supérieure de la seconde base de boîtier (138) étant fixée à la partie inférieure de la première base de boîtier (136) ; une première ouverture étant disposée sur une paroi latérale de la seconde base de boîtier (138), laquelle première ouverture transmet les signaux de luminescence générés par la substance à détecter et mène au commutateur de trajet de lumière de signalisation (124) ; et une deuxième ouverture (139) étant disposée à une partie inférieure de la seconde base de boîtier (138), laquelle deuxième ouverture (139) est placée pour correspondre à la substance à détecter.

11. - Détecteur de chimiluminescence entièrement automatique, déclenché par la lumière, selon l'une quelconque des revendications 8 à 10, dans lequel le commutateur de trajet de lumière de signalisation (124) comprend :
- un déflecteur (140), qui est fixé à l'unité de réception et de détection, et une troisième ouverture (142) correspondant à la première ouverture est disposée sur le déflecteur (140) ; et
- un dispositif de liaison à manivelle (141), qui est placé sur un côté du déflecteur (140) à proximité de la première ouverture.

12. - Détecteur de chimiluminescence entièrement automatique, déclenché par la lumière, selon la revendication 11, dans lequel le dispositif de liaison à manivelle (141) comprend :
- un premier composant rotatif (144), qui est fixé à un arbre de sortie de la seconde extrémité de la seconde partie d'actionnement (123) ; et
- un second composant rotatif (145), qui est relié de manière rotative au premier composant rotatif (144), et une quatrième ouverture (143) est disposée sur le second composant rotatif (145),
dans lequel le premier composant rotatif (144) et le second composant rotatif (145) sont tous deux reliés de manière rotative au déflecteur (140).

13. - Détecteur de chimiluminescence entièrement automatique, déclenché par la lumière, selon la revendication 12, dans lequel, lorsque la lumière d'excitation est conduite pour exciter la substance à détecter, la quatrième ouverture (143) est décalée par rapport à la première ouverture et à la troisième ouverture (142), et, à ce moment, le commutateur de trajet de lumière de signalisation (124) est dans un état fermé.

14. - Détecteur de chimiluminescence entièrement automatique, déclenché par la lumière, selon la revendication 13, dans lequel, lorsque les signaux de luminescence générés par la substance à détecter entrent dans l'unité de réception et de détection, la première ouverture et la troisième ouverture (142) sont alignées avec la quatrième ouverture, et le commutateur de trajet de lumière de signalisation (124) est dans un état ouvert ; et à ce moment, le commutateur de trajet de lumière d'excitation (122) bloque la lumière d'excitation.
